# EUROPÄISCHE PATENTANMELDUNG

(11) **EP 4 033 626 A1**
(43) Veröffentlichungstag der Anmeldung: **27.07.2022**
(21) Anmeldenummer: 21153547.1
(22) Anmeldetag: 26.01.2021
(51) Int. Cl.: H02J 3/00, H02J 3/24, H02J 3/38

(54) **VERFAHREN ZUM ÜBERWACHEN EINES ELEKTRISCHEN VERSORGUNGSNETZES**

(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Überwachen eines dreiphasigen elektrischen Versorgungsnetzes (500), wobei das elektrische Versorgungsnetz (500) eine Netztopologie mit örtlich verteilten Netzknoten (561-570) aufweist, und mehrere der Netzknoten als Beobachtungsknoten (561-570) ausgebildet sind, an denen jeweils wenigstens eine Spannung nach Betrag und Phase erfasst werden kann, umfassend die Schritte Erfassen jeweils wenigstens einer Knotenspannung (u(t)) an jedem Beobachtungsknoten, sodass mehrere Knotenspannungen erfasst werden, wobei jede Knotenspannung (u(t)) durch einen Knotenphasenwinkel (ϕ₁ - ϕₙ) gekennzeichnet ist, als Phasenwinkel der Knotenspannung, und jeder Knotenphasenwinkel jeweils einen Phasenwinkel in Bezug auf einen Referenzphasenwinkel einer Spannung beschreibt, sodass mehrere über die Netztopologie verteilte Knotenphasenwinkel vorhanden sind, Ermitteln wenigstens einer Phasenwinkelbeziehung (R₁-Rₘ), die jeweils eine Beziehung zwischen wenigstens zwei der über die Netztopologie verteilten Knotenphasenwinkel beschreibt, und Überprüfen des elektrischen Versorgungsnetzes auf eine Netzstörung in Abhängigkeit von der wenigstens einen Phasenwinkelbeziehung.

## Beschreibung

Die vorliegende Erfindung betrifft ein Verfahren zum Überwachen eines dreiphasigen elektrischen Versorgungsnetzes. Die Erfindung betrifft auch eine Überwachungsanordnung zum Überwachen eines dreiphasigen elektrischen Versorgungsnetzes.

Elektrische Versorgungsnetze sind bekannt. Sie dienen dazu, von Erzeugern erzeugte elektrische Leistung Verbrauchern zum Verbrauch bereitzustellen. Solche elektrischen Versorgungsnetze können sehr komplex sein, wie beispielsweise das europäische Verbundnetz. Als elektrisches Versorgungsnetz kann aber auch ein Teil eines solchen Netzes betrachtet und überwacht werden, wie beispielsweise das elektrische Versorgungsnetz Deutschlands oder Frankreichs als Teil des europäischen Verbundnetzes, um bei dem Beispiel zu bleiben. Solche elektrischen Versorgungsnetze weisen örtlich verteilte Erzeuger und damit Einspeiser auf, und örtlich verteilte Verbraucher. Sowohl die erzeugte und eingespeiste Leistung der Erzeuger als auch die verbrauchte Leistung der Verbraucher kann individuell schwanken, sogar zwischen 0 % und 100 %.

Das kann zu stark variierenden Lastflüssen in dem elektrischen Versorgungsnetz führen und das kann zu Schwingungen und sogar zu Instabilitäten führen.

Klassischerweise sind elektrische Versorgungsnetze so aufgebaut, dass sie mehrere große Erzeuger aufweisen, insbesondere große Kraftwerke mit Synchrongeneratoren, die direkt mit dem elektrischen Versorgungsnetz gekoppelt sind und dadurch in diese elektrische Leistung einspeisen. Bei dieser klassischen Struktur sind häufig die Betreiber der Kraftwerke auch die Betreiber des elektrischen Versorgungsnetzes bzw. eines erheblichen Abschnitts des elektrischen Versorgungsnetzes. Zur Steuerung gibt es daher entsprechende Leitzentralen, die in erster Linie die Erzeuger, also die genannten Großkraftwerke, steuern. Kleinere Verbraucher werden dabei eher statistisch berücksichtigt, wobei größere Verbraucher gegebenenfalls konkret hinsichtlich angeforderter Leistung berücksichtigt werden können.

Treten ungewöhnliche Leistungsschwankungen mit ungewöhnlichen Schwingungen oder sogar stabilitätskritische Situationen auf, oder andere Störungen, so kann die Leitzentrale hierauf reagieren. Häufig wird dies durch gut geschulte und erfahrene Personen in einer solchen Leitzentrale erledigt.

Zumindest einige elektrische Versorgungnetze oder zumindest Abschnitte von ihnen entwickeln sich aber zu einem elektrischen Versorgungsnetz, bei dem der Anteil eingespeister Leistung durch regenerative Energiequellen immer größer wird. Daraus ergeben sich wiederum vielfältige Änderungen. Besonders sind solche regenerativen Energiequellen meist kleinere, aber weiter verteilte Erzeuger, haben eine fluktuierende Leistung, sind teilweise durch spezielle Netztopologien angebunden und können sehr individuell auf Frequenz- und Spannungsänderungen des elektrischen Versorgungsnetzes reagieren, nämlich meist anders als direkt gekoppelte Synchrongeneratoren.

Damit kann es auch für eine Leitzentrale schwierig werden, das elektrische Versorgungsnetz wie bisher zu steuern. Besonders ist hervorzuheben, dass sich das elektrische Versorgungsnetz anders verhält als bisher und dass durch das Steuern der großen Erzeuger, besonders Großkraftwerke, weniger Einfluss auf das elektrische Versorgungsnetz genommen werden kann. Beispielsweise nimmt die stabilisierende Wirkung direkt gekoppelter Synchrongeneratoren am elektrischen Versorgungsnetz ab, wenn ihr Anteil abnimmt.

Um diese Probleme zu adressieren, gibt es meist umfangreiche Netzanschlussregeln, die für die regenerativen Energiequellen, also insbesondere Windenergieanlagen, Windparks und Photovoltaikanlagen, vorgeben, wie sie sich in welchen Situationen zu verhalten haben. Das beinhaltet besonders das Verhalten bei Spannungsänderungen, Frequenzänderungen und Netzfehlern.

Die Aufgabe der Netzsteuerung bleibt dennoch herausfordernd, jedenfalls in Grenzsituationen, und das Potential, erneuerbare Energiequellen zur Steuerung oder zumindest Beobachtung des elektrischen Versorgungsnetzes mit einzusetzen, scheint noch nicht gut ausgeschöpft zu sein.

Der vorliegenden Erfindung liegt somit die Aufgabe zugrunde, zumindest eines der oben genannten Probleme zu adressieren. Insbesondere soll eine Lösung vorgeschlagen werden, mit der das Überwachen eines elektrischen Versorgungsnetzes verbessert werden kann, insbesondere unter Zuhilfenahme des Potentials, das regenerative Energiequellen, zumindest Windenergieanlagen und/oder Windparks, haben. Zumindest soll zu bisher bekannten Lösungen eine alternative Lösung vorgeschlagen werden.

Erfindungsgemäß wird ein Verfahren nach Anspruch 1 vorgeschlagen. Das Verfahren betrifft somit das Überwachen eines dreiphasigen elektrischen Versorgungsnetzes. Das elektrische Versorgungsnetz weist eine Netztopologie mit örtlich verteilten Netzknoten auf und mehrere der Netzknoten sind als Beobachtungsknoten ausgebildet, an denen jeweils wenigstens eine Spannung nach Betrag und Phase erfasst werden kann. Das Verfahren umfasst die folgenden Schritte:
Ein Schritt betrifft das Erfassen jeweils wenigstens einer Knotenspannung an jedem Beobachtungsknoten, sodass mehrere Knotenspannungen erfasst werden, wobei jede Knotenspannung durch einen Knotenphasenwinkel gekennzeichnet ist, als Phasenwinkel der Knotenspannung, und jeder Knotenphasenwinkel jeweils einen Phasenwinkel in Bezug auf einen Referenzphasenwinkel einer Spannung beschreibt, sodass mehrere über die Netztopologie verteilte Knotenphasenwinkel vorhanden sind.

Der zu Grunde liegende Phasenwinkel und der Referenzphasenwinkel können mit der Netzfrequenz umlaufen, aber der betrachtete Knotenphasenwinkel läuft nicht um und bildet einen festen Wert, solange sich das elektrische Versorgungsnetz nicht verändert, also in einem stationären Zustand arbeitet. Stellen sich aber dynamische Abweichungen des Knotenphasenwinkels ein, können daraus auch dynamische Effekte im elektrischen Versorgungsnetz abgeleitet und damit erkannt werden.

Der Knotenphasenwinkel kann über eine längere Zeit gemittelt werden. Als längere Zeit kann ein Zeitraum zwischen einer viertel Periodenlänge bis zu zwei, drei oder insbesondere fünf Periodenlängen der Netzfrequenz angenommen werden.

So werden mehrere über die Netztopologie verteilte Knotenphasenwinkel berücksichtigt und dabei liegt besonders der Gedanke zu Grunde, dass aus den vielen Knotenspannungen und Knotenphasenwinkeln ein umfassendes Bild über diesen Abschnitt des elektrischen Versorgungsnetzes oder sogar über das gesamte elektrische Versorgungsnetz erstellt werden kann. Der Referenzphasenwinkel schafft eine einheitliche Basis. All die aufgenommenen Knotenphasenwinkel, die somit über das Netz verteilt sind, sind dadurch gut vergleichbar.

Die Knotenphasenwinkel müssen aber nicht ausdrücklich erfasst werden. Es kommt auch in Betracht, dass sie indirekt berücksichtigt werden, z.B. durch die Zeiten der Nulldurchgänge der jeweiligen Knotenspannung. Wichtig sind die Knotenphasenwinkel, zumindest jeweils einige davon, zueinander in Beziehung zu setzen. Das kann auch indirekt erfolgen, also ohne jeden einzelnen Knotenphasenwinkel ausdrücklich zu erfassen und in seiner Größe anzugeben. So können auch die erfassten Spannungssignale der Knotenspannungen unmittelbar verglichen werden und erst daraus eine Beziehung der Phasenwinkel abgeleitet werden.

Ein Schritt betrifft somit das Ermitteln wenigstens einer Phasenwinkelbeziehung, die jeweils eine Beziehung zwischen wenigstens zwei der über die Netztopologie verteilten Knotenphasenwinkel beschreibt. Hier wurde erkannt, dass die Betrachtung der Phasenwinkel alleine, also deren absoluter Werte, nur wenig Aussagekraft hat. Eine Phasenwinkelbeziehung kann eine Differenz zwischen zwei Phasenwinkeln zweier Beobachtungsknoten beschreiben. Sind diese beiden Beobachtungsknoten - um zur Veranschaulichung ein einfaches Beispiel zu nehmen - mit einer Übertragungsleitung verbunden, so ist aus der Differenz zwischen den beiden Phasenwinkeln eine Phasenwinkelveränderung entlang dieser Übertragungsleitung ableitbar. Das lässt Rückschlüsse auf die Übertragungsleitung zu, aber auch auf einen aktuellen Lastfluss über diese Übertragungsleitung. Ein Lastfluss kann synonym auch als Leistungsfluss bezeichnet werden.

Es kann auch die Fortpflanzung einer Veränderung des Knotenphasenwinkels von einem Beobachtungsknoten zum nächsten Beobachtungsknoten beinhalten. Es können auch mehr als zwei Knotenphasenwinkel über eine Phasenwinkelbeziehung beschrieben werden. Beispielsweise kann die bereits beispielhaft genannte Fortpflanzung einer Veränderung eines Knotenphasenwinkels über drei oder mehr Beobachtungsknoten beschrieben werden. Sind beispielsweise drei Beobachtungsknoten in einer Dreieckstopologie miteinander verbunden, können auch die absoluten Veränderungen der Phasenwinkel zwischen diesen drei Knotenphasenwinkeln für diese Topologie aussagekräftig sein. Auch das ist nur ein Beispiel und es kommt auch in Betracht, noch mehr Knoten, also vier oder mehr Bearbeitungsknoten, dabei in Beziehung zu stellen, die beispielsweise über eine vermaschte Struktur miteinander verbunden sein können.

Ein Schritt betrifft das Überprüfen des elektrischen Versorgungsnetzes auf eine Netzstörung in Abhängigkeit von der wenigstens einen Phasenwinkelbeziehung. Hier wurde besonders erkannt, dass über die Beobachtung der Phasenwinkelbeziehungen eine Netzstörung erkannt werden kann. Gibt es beispielsweise einen Netzkurzschluss, so führt dieser zu entsprechenden Stromflüssen, die wiederum die Knotenphasenwinkel beeinflussen können. Anschaulich ausgedrückt verändern sich die Knotenphasenwinkel umso stärker, je näher sie an dem Kurzschlussort sind. Damit kann diese Netzstörung nicht nur erkannt, sondern sogar lokalisiert werden.

Eine Netzstörung kann aber auch in der Auftrennung einer Übertragungsleitung bestehen. Besonders kann diese Auftrennung zwischen zwei Beobachtungsknoten stattfinden und das kann dazu führen, dass die entsprechenden Knotenphasenwinkel sich schnell aber ansonsten unabhängig voneinander verändern, um ein weiteres Beispiel zu nennen.

Meist gibt es einen Grund für das Auftrennen eines Netzabschnitts, also beispielsweise für das Auftrennen einer Übertragungsverbindung zwischen zwei Beobachtungsknoten. Dieser Grund kann insbesondere an einer Seite dieser Auftrennung vorliegen, an der anderen aber nicht. Auch das kann dann in der Phasenwinkelbeziehung erkennbar sein.

Gemäß einem Aspekt wird vorgeschlagen, dass zum Prüfen auf die Netzstörung eine zeitliche und örtliche Veränderung der Knotenphasenwinkel ausgewertet wird. Eine solche zeitliche oder örtliche Veränderung kann eine Phasenwinkelbeziehung sein oder aus einer abgeleitet werden. Hier geht es besonders darum, eine wellenartige Ausbreitung einer Phasenwinkelveränderung zu erkennen und auszuwerten.

Eine zeitliche und örtliche Veränderung der Knotenphasenwinkel kann beispielsweise bedeuten, dass ein Knotenphasenwinkel an einem ersten Beobachtungsknoten ansteigt, ein Knotenphasenwinkel an einem zweiten Beobachtungsknoten etwas später ebenfalls ansteigt, und ein Knotenphasenwinkel an einem dritten Beobachtungsknoten noch etwas später ansteigt. Die Amplituden der Anstiegsgeschwindigkeit können dabei unterschiedlich sein. Es kann somit beobachtet werden, wie sich eine Phasenwinkelveränderung von dem ersten Beobachtungsknoten über den zweiten Beobachtungsknoten zum dritten Beobachtungsknoten fortpflanzt, um ein einfaches Beispiel zu nennen. Jeder Knotenphasenwinkel verändert sich somit an seinem Beobachtungsknoten mit der Zeit, sodass eine zeitliche Veränderung der Knotenphasenwinkel vorliegt. Außerdem variiert die jeweilige Veränderung aber auch von einem Beobachtungsknoten zum nächsten, sodass dadurch eine örtliche Veränderung der Knotenphasenwinkel vorliegt.

Besonders kann eine solche zeitliche und örtliche Veränderung der Knotenphasenwinkel einen Rückschluss auf eine sich entsprechend ausbreitende Netzstörung, also sich örtlich ausbreitende Netzstörung, zulassen. Mitunter kann dadurch erkannt werden, in welche Richtung sich diese Netzstörung ausbreitet und entsprechend kann dem entgegengewirkt werden.

Es können auch andere Ausbreitungen erkannt werden, zum Beispiel das Ansteigen eines Lastflusses, ohne dass dies zunächst zu einer Netzstörung oder gar einem Netzfehler führen muss. Die Erhöhung eines Lastflusses kann ein Hinweis darauf sein, dass an einem Ort, zum Beispiel einem ersten Übertragungsknoten, ein Versorgungsmangel vorliegt. Es wird also weniger Leistung erzeugt als verbraucht. Dieser Leistungsmangel kann durch Zuführung von Leistung behoben werden, zum Beispiel durch Leistung von einem benachbarten zweiten Beobachtungsknoten. Das kann dann bei diesem zweiten Beobachtungsknoten zu einem Leistungsdefizit führen und dazu, dass diese Leistung bereitgestellt wird, zum Beispiel von einem benachbarten dritten Übertragungsknoten.

Jedes Leistungsdefizit kann durch eine entsprechende Phasenwinkelveränderung, also eine Veränderung des Knotenphasenwinkels des betreffenden Beobachtungsknotens, erkannt werden. So wie sich dieses Leistungsdefizit von einem Beobachtungsknoten zum nächsten fortpflanzt, pflanzt sich auch eine Veränderung des Knotenphasenwinkels weiter fort. Das kann erkannt werden und dadurch gegebenenfalls einem weiteren Ausbreiten des Leistungsdefizits entgegengewirkt werden.

Im Übrigen wurde erkannt, was für alle Aspekte grundsätzlich zutrifft, dass ein Phasenwinkel, und damit auch seine Veränderung, sehr schnell detektiert werden kann. Insbesondere wurde erkannt, dass bei einer kontinuierlichen Überwachung einer Netzspannung schnell und dauerhaft ein Phasenwinkel erfasst werden kann.

Außerdem wurde auch erkannt, dass ein Phasenwinkel sinnvollerweise nur zwischen den Werten -90° und +90° variieren kann. Anders als beispielsweise bei der Netzspannung bedarf es daher keiner Normierung oder Umrechnung zwischen unterschiedlichen Spannungsniveaus. Phasenwinkel sind stattdessen unmittelbar vergleichbar.

Gemäß einem Aspekt wird vorgeschlagen, dass jeweils mit einer Frequenz umlaufende Phasenwinkel der Knotenspannung erfasst werden, und/oder eine mittlere Frequenz und/oder eine mittlere Frequenzdrift des elektrischen Versorgungsnetzes oder eines Netzabschnitts davon aus den mit der Frequenz umlaufenden Phasenwinkeln erfasst wird, und optional aus der Frequenzdrift eine Leistungsbilanz des elektrischen Versorgungsnetzes bzw. des Netzabschnitts abgeleitet wird.

Durch die Erfassung der umlaufenden Phasenwinkel können diese aber gut für ein Erfassen von Knotenphasenwinkeln verwendet werden, die nicht umlaufen, nämlich durch Vergleich mit einem umlaufenden Referenzphasenwinkel. Die umlaufenden Phasenwinkel können aber auch gut für andere Zwecke wie das Ermitteln einer Frequenz oder Frequenzdrift verwendet werden. Im Grunde ist die Frequenz der jeweiligen Knotenspannung die Ableitung ihrer mit der Frequenz umlaufenden Phasenwinkel. Eine Erfassung ist also leicht möglich.

Das Erfassen einer Frequenz ist bekannt und wird auch gut beherrscht, z.B. von Windenergieanlagen, die in ein elektrisches Versorgungsnetz einspeisen. Es wurde hier aber erkannt, dass durch die Verwendung der umlaufenden Phasenwinkel der Knotenspannungen sehr schnell die Frequenz erfasst werden kann, und dennoch eine gute Filterung möglich ist. Das wird dadurch erreicht, dass eine Mitteilung über viele örtlich verteilte Werte erfolgen kann. Es können somit viele Messwerte berücksichtig werden, ohne dass dafür ein langes Messintervall nötig ist.

Eine Frequenzdrift beschreibt eine Veränderung der Frequenz, insbesondere nach der Zeit. Die Frequenzdrift kann durch die genannte Erfassung der Frequenz ebenfalls gut erfasst werden. Besonders kann auch eine Frequenzdrift als Veränderung der Frequenz mit dem Ort bezeichnet werden. Durch die Verwendung der örtlich verteilten und umlaufenden Phasenwinkel ist eine solche Erkennung der Frequenzdrift gut möglich.

Aus der Frequenzdrift, insbesondere der Veränderung der Frequenz nach der Zeit, ist auch eine Leistungsbilanz erkennbar. Dies ist besonders schnell möglich und kann örtlich gut eingegrenzt werden, da lokal verteilte und dabei örtlich zugeordnete Werte verwendet werden.

Obwohl hier besonders gut eine lokale Erfassung, insbesondere lokale Frequenzerfassung und/oder Erfassung einer lokalen Leistungsbilanz möglich ist, kann aber auch ein globales

Ereignis gut erkannt werden, also ein das gesamte elektrische Versorgungsnetz betreffendes Ereignis. Die beschriebene lokale Erfassung ist anderweitig schwierig möglich, sodass hier eine Lösung geschaffen wird.

Gemäß einem Aspekt wird vorgeschlagen, dass die Netzstörungen in Abhängigkeit von der wenigstens einen Phasenwinkelbeziehung nach Netzstörungsart und/oder Amplitude bewertet werden. Zunächst wurde hier erkannt, dass Netzstörungen unterschiedlicher Art auftreten können und auch durch das vorgeschlagene Verfahren erkannt werden können. Welche Netzstörungsart vorliegt, kann auch in Abhängigkeit von derwenigstens einen Phasenwinkelbeziehung bewertet werden, nämlich erkannt werden. Beispielsweise führt eine Topologieumschaltung der Netztopologie zu einem anderen Verhältnis der Knotenphasenwinkel untereinander, als wenn ein kaskadiertes Trennen vorliegt, um hier zwei Netzstörungsarten exemplarisch zu nennen. Details zu unterschiedlichen Netzstörungsarten werden unten noch beschrieben.

Außerdem oder alternativ kann die Amplitude der Netzstörung ebenfalls in Abhängigkeit von der wenigstens einen Phasenwinkelbeziehung erfasst oder zumindest bewertet werden. Die Amplitude bei einer Topologieumschaltung kann bezeichnen, wie groß die resultierenden Änderungen sind, ob also gemessen an ihrer Leistungsübertragungsfähigkeit eine große oder kleine Übertragungsleitung aufgetrennt bzw. verbunden wurde. Bei einer Netzpendelung kann die Amplitude die Amplitude der Schwingung kennzeichnen. Bei einem kaskadierten Trennen kann die Amplitude kennzeichnen, wie viel Leistung pro Zeiteinheit abgetrennt wird, um ein weiteres Beispiel zu nennen.

Gemäß einem Aspekt wird vorgeschlagen, dass die Netzstörungen, auf die geprüft wird, aus den folgenden Netzstörungsarten ausgewählt sind. Bei der Prüfung bzw. Bewertung der Netzstörungen nach Netzstörungsart wird demnach geprüft, ob eine der folgenden Netzstörungsarten vorliegt. Hier kann vorgeschlagen werden, dass nur von diesen Netzstörungsarten ausgegangen wird. Bei der Auswertung der wenigstens einen Phasenwinkelbeziehung wird somit geprüft, welche Netzstörungsart durch die erfasste wenigstens eine Phasenwinkelbeziehung am wahrscheinlichsten gekennzeichnet wird, bzw. welche Netzstörungsart der zu Grunde gelegten Netzstörungsarten am besten der wenigstens einen erfassten Phasenwinkelbeziehung zugeordnet werden kann.

Es wurde besonders erkannt, dass dann, wenn es bei einigen Beobachtungsknoten zu einer plötzlichen Änderung der Spannungslage kommt, auf eine Störung geschlossen werden kann. Das ist besonders dann der Fall, wenn sich eine solche Änderung der Spannungslage zu einem benachbarten Knoten fortpflanzt und gegebenenfalls noch weiter fortpflanzt. Es findet also eine kollektive Änderung der Spannungslage statt, also eine kollektive Änderung der Knotenphasenwinkel.

Es wurde erkannt, dass aus der Art der kollektiven Änderung auf die Art der Störung geschlossen werden kann. Insoweit wurde erkannt, dass die Art der Störung, also die Netzstörungsart, charakteristisch sein kann, also einen charakteristischen Fingerabdruck aufweisen kann.

Eine Netzstörungsart ist eine Topologieumschaltung, bei der die Netztopologie durch wenigstens eine Umschaltung verändert wird.. Eine solche Topologieumschaltung, kann dadurch erkannt werden, dass es an der Bruchkante, also dort, wo die Umschaltung auftritt, zu einer starken Änderung der Spannungswinkel und damit der Knotenphasenwinkel bzw. des Knotenphasenwinkels kommt.

Als Topologieumschaltung kommt insbesondere in Betracht, dass Übertragungswege verändert werden. Hierbei treten Trennungen von Übertragungswegen auf, wobei an anderer Stelle neue Übertragungswege entstehen können.

Eine Netzstörung ist eine Netztrennung, bei derwenigstens zwei Netzabschnitte voneinander getrennt werden. Eine solche Netztrennung, die auch als System-Split bezeichnet werden kann, ist eine Situation, bei der zwei bisher zusammenarbeitende Abschnitte des elektrischen Versorgungsnetzes in zwei getrennt voneinander arbeitende Abschnitte, nämlich Systeme, getrennt werden. Die Größe der hierbei aufgetrennten Übertragungswege nach übertragbarer Leistung kann die Amplitude dieser Netzstörung kennzeichnen.

Dort, wo die Trennung durchgeführt wird, was auch als Bruchkante bezeichnet werden kann, kommt es zu einer starken Änderung der Spannungswinkel und damit der Knotenphasenwinkel. Das kann entsprechend erkannt werden. Außerdem kommt es im Mittel zu einer Beschleunigung und Abbremsung der Frequenz. Besonders kommt in Betracht, dass an der einen Seite der Bruchkante eine Beschleunigung und an einer anderen eine Abbremsung der Frequenz auftritt. Das macht sich dann entsprechend in einer Vergrößerung oder Verringerung der betreffenden Knotenphasenwinkel bemerkbar.

Außerdem kann von der Bruchkante weg, also jeweils in Richtung des abgetrennten Netzabschnitts, eine Welle durch das Netz bzw. diesen Netzabschnitt verlaufen. Eine solche Welle kann als Welle der Phasenwinkelveränderung bezeichnet werden. Der Knotenphasenwinkel erhöht sich also zunächst an der Bruchkante, oder verringert sich, und diese Erhöhung bzw. Verringerung tritt dann an benachbarten Beobachtungsknoten, die nicht mehr an der Bruchkante sind, etwas später auf, und noch etwas später an noch weiter entfernten Beobachtungsknoten. Dadurch kann ein solcher System Split erkannt werden.

Im Übrigen kann eine Unterscheidung zwischen Systemtrennung und Topologieumschaltung auch durch die danach unterschiedliche Frequenz ermittelt werden. Bei der Netztrennung unterscheiden sich nämlich die Frequenzen der getrennten Netzabschnitte nach der Trennung.

Eine Netzstörungsart ist ein kaskadiertes Trennen, bei dem nach und nach Netzabschnitte des elektrischen Versorgungsnetzes voneinander getrennt werden, potentiell in das elektrische Versorgungsnetz einspeisende Erzeuger von dem elektrischen Versorgungsnetz getrennt werden und/oder potentiell aus dem elektrischen Versorgungsnetz Leistung beziehende Verbraucher von dem elektrischen Versorgungsnetz getrennt werden.

Das Trennen zweier Netzabschnitte voneinander kann einem System Split entsprechen, hier geht es aber darum, dass eine solche Abtrennung nach und nach erfolgt, also ein Netzabschnitt von einem anderen getrennt wird und in einem nächsten Schritt ein weiterer Netzabschnitt abgetrennt wird, und gegebenenfalls immer so weiter.

Das kaskadierte Trennen kann somit auch das Abtrennen von Erzeugern betreffen, die nämlich nach und nach abgetrennt werden, mit anderen Worten also ein Erzeuger nach dem anderen. Ebenfalls kann das kaskadierte Trennen das Trennen von Verbrauchern von dem elektrischen Versorgungsnetz betreffen, das ebenfalls nach und nach erfolgt.

Das Problem bei dem kaskadierten Trennen ist besonders, dass ein erstes Trennen aufgrund einer Schutzmaßnahme erfolgen kann, also um eine Überlastung des elektrischen Versorgungsnetzes oder eines Abschnitts davon zu vermeiden. Je nach Situation kommt dann in Betracht, dass nach dem ersten Trennen das Problem nicht gelöst, sondern verschlimmert wird. Entsprechend wird dann als nächste Schutzmaßnahme die nächste Trennung durchgeführt, wodurch sich dann das Problem noch stärker verschlimmern kann. In diesem Sinne können immer mehr Trennungen durchgeführt werden. Das kann das Trennen von Netzabschnitten, das Trennen von Erzeugern, also Einspeisern, und von Verbrauchern betreffen, sowohl jeweils nur einen dieser drei Fälle, oder auch eine Kombination. Ein wechselseitiges Trennen von Erzeugern und Verbrauchern kann zum Beispiel zu einem Aufschwingen gehören, das dadurch verhindert werden sollte, tatsächlich aber angeregt wird.

Es wurde erkannt, dass es bei jeder Trennung aufgrund der geänderten lokalen Lastflüsse zu einem lokalen Sprung des Spannungswinkels mit einer anschließenden wellenartigen Ausbreitung kommt. Der Knotenphasenwinkel der betreffenden Beobachtungsknoten springt also und diese Änderung pflanzt sich dann in den verbleibenden Netzabschnitt hinein fort. Dadurch kann dieses kaskadierte Trennen erkannt werden.

Trennen sich kaskadiert mehrere Netzteile, die insbesondere Erzeuger und Verbraucher aufweisen, so kann ein solches Ereignis entsprechend mehrmals beobachtet werden, mit unterschiedlichem Ursprung der Welle. Der erste lokale Sprung wenigstens eines Knotenphasenwinkels erfolgt also bei jeder dieser einzelnen Trennungen an unterschiedlichen Orten im elektrischen Versorgungsnetz, was hier als Ursprung der Welle bezeichnet wird, und pflanzt sich von dort aus fort. Dies kann ein Indikator für eine aufkommende Großstörung sein.

Ein kaskadiertes Trennen von Netzteilen, Erzeugern und/oder Verbrauchern kann somit frühzeitig erkannt werden, wenn solche Wellen beobachtet werden, die unterschiedliche Ursprünge haben. Solche Wellen können über die umfassende Beobachtung entsprechend vieler Knotenphasenwinkel an entsprechend vielen Beobachtungsknoten erfasst werden. Die einzelnen Trennstellen können dadurch sogar lokalisiert werden und dadurch können gezielt Gegenmaßnahmen eingeleitet werden.

Eine Netzstörungsart ist ein Ausfall wenigstens eines Leistungsübertragungspfads, auf dem Leistung zwischen wenigstens zwei Netzknoten vor dem Ausfall übertragen wurde, insbesondere zwischen wenigstens zwei Beobachtungsknoten. Fällt zum Beispiel eine von zwei parallellaufenden Leitungen aus, kommt es über der verbleibenden Leitung zu einer Vergrößerung der Spannungswinkeldifferenz, also zu einer Vergrößerung der Winkeldifferenz der beiden Knotenphasenwinkel der Beobachtungsknoten, zwischen denen diese Leitung angeordnet ist. Dadurch kann ein solcher Ausfall eines Leistungsübertragungspfads erkannt werden.

Auch andere Leitungsausfälle mit einem Einfluss auf eine lokale Netzimpedanz werden durch sich verändernde Spannungszeiger, insbesondere springende Spannungszeiger, erkannt. Ein solcher Spannungszeiger kann für den Knotenphasenwinkel stehen, oder auch für die Differenz zwischen zwei Knotenphasenwinkeln. Es wird somit besonders vorgeschlagen, die Differenz zwischen zwei Knotenphasenwinkeln zu prüfen, die nämlich eine Phasenwinkelbeziehung darstellt. Tritt hierbei ein Sprung auf, kann von einem Ausfall wenigstens eines Leistungsübertragungspfades ausgegangen werden.

Hier wurde besonders auch erkannt, dass sehr schwache Netzbedingungen durch eine große Differenz zwischen Knotenphasenwinkeln erkannt werden kann. Solche schwachen Netzbedingungen liegen vor, wenn entsprechend viele Leistungsübertragungspfade ausgefallen sind, ohne dass aber schon eine vollständige Trennung erfolgt ist. Eine solche Trennung droht dann aber, wenn eine sehr schwache Netzbedingung erkannt wurde. Eine schwache Netzbedingung kann auch bedeuten, dass eine Impedanz groß geworden ist.

Eine weitere Netzstörungsart ist ein Netzkurzschluss, bei dem wenigstens ein Kurzschluss zwischen zwei Phasen des elektrischen Versorgungsnetzes oder wenigstens zwischen einer Phase des elektrischen Versorgungsnetzes und Erde auftritt. Ein solcher Netzkurzschluss kann zu entsprechenden Kurzschlussströmen zum Kurzschluss hinführen, die zu entsprechenden Phasenwinkeldifferenzen an Leitungsimpedanzen führen, die einen solchen Kurzschlussstrom zuführen. Zudem bricht die Spannung ein, je näher der entsprechende Netzknoten, also auch Beobachtungsknoten, am Kurzschluss ist. Eine entsprechende Veränderung der Knotenphasenwinkel von einem zum nächsten Beobachtungsknoten zum Ort des Kurzschlusses hin kann somit beobachtet werden. Daraus kann ein solcher Netzkurzschluss abgeleitet werden.

Eine Netzstörungsart ist eine Leistungspendelung, bei der Leistung zwischen Netzabschnitten des elektrischen Versorgungsnetzes pendelt. Ähnlich wie die Leistung, die hierbei in dem Netz hin und her läuft, zumindest in ihrer Höhe zwischen den Netzabschnitten wechselseitig schwankt, lassen sich auch entsprechende Wellen bei den Knotenphasenwinkeln erkennen. Eine Leistungspendelung ist besonders dann als Störung einzustufen, wenn sie zu groß wird. Als Kriterium kann eine periodische Lastflussvariation bewertet werden.

Gemäß einem Aspekt wird vorgeschlagen, dass zum Prüfen auf eine Leistungspendelung in Abhängigkeit von der wenigstens einen Phasenwinkelbeziehung ein Vorliegen einer periodischen Lastflussvariation geprüft wird, wobei eine periodische Lastflussvariation eine periodisch wiederkehrende Variation eines Leistungsflusses beschreibt, und der Lastfluss einen Leistungsfluss zwischen wenigstens zwei Netzabschnitten und/oder auf einer Hochspannungsübertragungsleitung beschreibt, wobei von einer Leistungspendelung ausgegangen wird, wenn eine periodische Lastflussvariation um einen Wert erkannt wurde, der oberhalb eines vorgebbaren Variationsreferenzwertes liegt. Der Variationsreferenzwert beträgt insbesondere wenigstens 2%, wenigstens 5 %, insbesondere wenigstens 10 %.

Die periodisch wiederkehrende Variation liegt insbesondere im Bereich von 0,1 bis 2Hz, insbesondere im Bereich von 0,2 bis 1Hz.

Solche Leistungspendelungen sind dem Grunde nach bekannt und mitunter schwierig zu erkennen, weil sie zunächst keine harten Effekte im Netz auslösen. Sie könnten an geringen Spannungsänderungen oder Frequenzänderungen erkannt werden; solche Änderungen können aber auch durch andere Zustände oder Situationen im elektrischen Versorgungsnetz hervorgerufen werden. Durch das Untersuchen wenigstens einer Phasenwinkelbeziehung, insbesondere ihrer Veränderung und insbesondere, wenn sehr viele Phasenwinkelbeziehungen betrachtet werden, kann eine Lastflussvariation erkannt werden. Besonders bei einer Beobachtung über das elektrische Versorgungsnetz verteilter Phasenwinkelbeziehungen kann auch bei diesen eine wellenförmige, insbesondere oszillierende Veränderung erkannt werden, die wiederum geeignet ist, eine Lastflussvariation zu erkennen. Daraus kann wiederum auf die Leistungspendelung geschlossen werden.

Kommt es in einem elektrischen Versorgungsnetz zu Leistungspendelungen, so kann dies so erklärt werden, dass diese vergleichbar mit Wellen durch das Netz laufen und den Spannungswinkel an den durchlaufenden Netzknoten verschieben. Sie verschieben also die Knotenphasenwinkel an den Beobachtungsknoten. Es stellen sich somit temporär andere Lastflüsse ein, welche auf eine Leistungspendelung schließen lassen. Die Veränderung der Lastflüsse lässt sich über Veränderung der Phasenwinkelbeziehungen erkennen.

Bei dem Erkennen geht es insbesondere um eine Erfassung dieser Lastflussvariationen. Dazu können die Knotenphasenwinkel an mehreren Beobachtungsknoten über einen kürzeren Zeitraum ausgewertet werden. Ein solcher kürzerer Zeitraum bezieht sich insbesondere auf den Zeitraum, über den solche Netzpendelungen auftreten oder sich sogar aufschaukeln können. Insbesondere kann der Zeitraum im Bereich von einigen Minuten liegen, insbesondere im Bereich von 10 bis 30 Sekunden, insbesondere im Bereich von 30 bis 120 Sekunden.

Mit der Veränderung der Phasenwinkelbeziehung können somit jeweils Lastflussvariationen erkannt werden und das lässt auf Leistungspendelungen schließen.

Gemäß einem Aspekt wird vorgeschlagen, dass zum Prüfen auf eine Netztrennung ein Vorliegen einer Knotenphasenwelle geprüft wird, wobei eine Knotenphasenwelle eine Veränderung eines Knotenphasenwinkels beschreibt, die sich ausgehend von wenigstens einem der Beobachtungsknoten zu weiteren Beobachtungsknoten fortsetzt. An einem Beobachtungsknoten nimmt also beispielsweise der Knotenphasenwinkel zu, insbesondere kontinuierlich zu, und eine Zunahme eines Knotenphasenwinkels wird etwas später in wenigstens einem benachbarten Beobachtungsknoten erkannt und noch etwas später an noch einem Beobachtungsknoten, und so weiter. Gleiches kann natürlich auch für die Abnahme eines Knotenphasenwinkels auftreten und erkannt werden. Eine solche Knotenphasenwelle kann auch anschaulich wie das Umfallen von Dominosteinen beschrieben werden.

Ein Dominostein, der repräsentativ für den Phasenwinkel an einem Beobachtungsknoten steht, fällt um und stößt dabei den nächsten Dominostein an, der repräsentativ für einen Phasenwinkel eines benachbarten Beobachtungsknotens steht. Dieser Dominostein stößt dann einen weiteren an, und so weiter. Es kommt aber auch in Betracht, auch das lässt sich mit Dominosteinen abbilden, dass ein Dominostein zwei oder mehr Dominosteine unmittelbar anstößt und diese stoßen dann wiederum ihrerseits jeweils mehrere Dominosteine an. Die Ausbreitung der Welle erfolgt dann also nicht nur in einer Dimension, sondern breitet sich zweidimensional aus. Die Ausbreitung erfolgt dann also, um eine weitere Metapher zu verwenden, wie die Welle auf einem See, in den ein Stein geworfen wurde. Da hier auf eine Netztrennung geprüft wird, entspreche dies allerdings eher der Situation, bei der besagter Stein am Seerand in den See geworfen wird.

Es wird nun vorgeschlagen, dass von einer Netztrennung ausgegangen wird, wenn folgende Veränderungen erkannt werden. Zunächst wird eine Veränderung eines Knotenphasenwinkels, insbesondere ein Sprung des Knotenphasenwinkels, an einem ersten Beobachtungsknoten um einen Wert erkannt, der dem Betrage nach wenigstens einen vorgebbaren ersten Veränderungsreferenzwinkel aufweist. Danach wird um eine Ausbreitungszeit zeitlich versetzt eine Veränderung eines Knotenphasenwinkels, insbesondere ein Sprung des Knotenphasenwinkels, an wenigstens einem zweiten Beobachtungsknoten um einen Wert erkannt, der dem Betrage nach wenigstens einen vorgebbaren zweiten Veränderungsreferenzwinkel aufweist. Zur Überprüfung auf eine Netztrennung wird somit ein Knotenphasenwinkel an einem ersten Beobachtungsknoten und an wenigstens einem zweiten Beobachtungsknoten auf Veränderungen überprüft. Für beide Veränderungen werden Referenzwerte zugrunde gelegt und außerdem wird überprüft, ob die Veränderungen zeitlich versetzt auftreten. Durch die Referenzwerte wird ausgeschlossen, dass bei sehr kleinen Veränderungen und auch bei Veränderungen, die nur auf Messungenauigkeiten zurückzuführen sind, eine falsche Schlussfolgerung gezogen wird.

Insbesondere wird zugrunde gelegt, dass der zweite Veränderungsreferenzwinkel kleiner als der erste Veränderungsreferenzwinkel ist und wenigstens 15° beträgt, insbesondere wenigstens 30° beträgt und/oder dass die Ausbreitungszeit im Bereich von 200 ms bis 1000 ms liegt.

Es wurde besonders erkannt, dass bei einer solchen Knotenphasenwelle die Amplitude mit zunehmender Entfernung vom Ursprung abnimmt, sodass der Veränderungsreferenzwinkel für den ersten Beobachtungsknoten am größten gewählt wird. Es ist zu beachten, dass 5° oder sogar 10° für den zweiten Veränderungsreferenzwinkel bedeutet, dass der erste Veränderungsreferenzwinkel noch größer ist, solche Werte für eine Veränderung eines Knotenphasenwinkels somit sehr große Werte sind. Insbesondere ist vorgesehen, dass auf einen Knotenphasensprung geprüft wird und ein Knotenphasensprung um 15° oder 30° ist ein sehr großer Sprung.

Es wurde also besonders erkannt, dass durch die Netztrennung ein Knotenphasenwinkel sich verändert, insbesondere springt. Ein Sprung liegt insbesondere für eine Veränderung vor, die im Wesentlichen innerhalb von 200 ms stattfindet.

Es wurde erkannt, dass die Ausbreitung einer solchen Knotenphasenwelle über das elektrische Versorgungsnetz bzw. den relevanten Netzabschnitt im Bereich von einigen Sekunden liegen kann. Die Ausbreitungszeit, die die Zeit der Ausbreitung von einem Beobachtungsknoten zu einem nächsten Beobachtungsknoten betrifft, wird daher vorzugsweise im Bereich von 20 ms bis 100 ms gewählt.

Vorzugsweise werden aber weit mehr als nur zwei Beobachtungsknoten verwendet, um eine Knotenphasenwelle zu erkennen. Insbesondere kann ergänzend geprüft werden, ob um eine Ausbreitungszeit zeitlich versetzt eine Veränderung eines Knotenphasenwinkels, insbesondere ein Sprung des Knotenphasenwinkels, an wenigsten einem dritten Beobachtungsknoten erkannt wurde. Es wird geprüft, ob dieser gegenüber dem wenigstens einen zweiten Beobachtungsknoten zeitlich versetzt ist, und ob der Sprung um einen Wert erkannt wurde, der dem Betrage nach wenigstens einen vorgebbaren dritten Veränderungsreferenzwinkel aufweist.

Der Einfachheit halber kann der dritte Veränderungsreferenzwinkel in der Größe des zweiten Veränderungsreferenzwinkels gewählt werden, oder etwas kleiner. Auf diese Art und Weise können auch die Knotenphasenwinkel an wenigstens einem vierten, fünften und sechsten Beobachtungsknoten überprüft werden, wobei jeweils eine Ausbreitungszeit von einem zum nächsten Beobachtungsknoten geprüft wird.

Gemäß einem Aspekt wird vorgeschlagen, dass zum Prüfen auf ein kaskadiertes Trennen ein Vorliegen mehrmaliger Spannungssprünge geprüft wird, wobei jeder Spannungssprung als Knotenphasenwinkelsprung eines Knotenphasenwinkels an einem Beobachtungsknoten in Bezug auf einen Knotenphasenwinkel an einem anderen Beobachtungsknoten auftritt, und wenigstens drei Phasenwinkelsprünge beobachtet werden. Es wird dann von einem kaskadierten Trennen ausgegangen, wenn jeder der Knotensprünge eine Knotenphasenwinkelveränderung von wenigstens einer vorgebbaren Referenzwinkelveränderung aufweist, und ein zeitlicher Abstand zwischen jeweils zwei Knotenphasensprüngen vorliegt. Dieser zeitliche Abstand kann als Sprungabstand bezeichnet werden und liegt im Bereich von 100 ms bis 10 Sekunden. Die Sprunghöhe beträgt mindestens 0,5°, insbesondere mindestens 2°.

Somit können wenigstens drei Phasenwinkelsprünge beobachtet werden, die in einer zeitlichen Abfolge auftreten und die damit Rückschluss auf das kaskadierte Trennen zulassen.

Gemäß einem Aspekt wird vorgeschlagen, dass zum Prüfen auf einen Ausfall von Leitungen ein Vorliegen einer erhöhten Knotenphasenwinkeldifferenz zwischen Knotenphasenwinkeln zweier Beobachtungsknoten geprüft wird, wobei von einer erhöhten Knotenphasenwinkeldifferenz und damit von wenigstens einem Ausfall einer Leitung ausgegangen wird, wenn eine erfasste Knotenphasenwinkeldifferenz dem Betrage nach wenigstens um einen vorbestimmten Offsetwinkel oberhalb einer für diese beiden Beobachtungsknoten durchschnittlichen Knotenphasenwinkeldifferenz liegt. Hier liegt die Erkenntnis zugrunde, dass eine Knotenphasenwinkeldifferenz als Differenz zwischen zwei Knotenphasenwinkeln, nämlich an zwei Beobachtungsknoten, im Grunde ganz normal ist und erst ihre Veränderung, wenn sie nämlich groß genug ist, auf einen Ausfall von Leitungen, also auf einen Ausfall von wenigstens einer Leitung, hinweist.

Hier liegt im Grunde folgende Überlegung zu Grunde, die auch für die übrigen Fälle relevant ist. Vorzugsweise werden sehr viele Beobachtungsknoten beobachtet und somit sehr viele Knotenphasenwinkel erfasst, insbesondere 50 oder mehr. Sind beispielsweise zwei Beobachtungsknoten in dem elektrischen Versorgungsnetz oder dem betrachteten Netzabschnitt weit voneinander entfernt, sodass es durch ein vermaschtes Netz viele theoretische Übertragungswege zwischen diesen beiden Knoten gibt, wird der Ausfall einer Leitung die Knotenphasenwinkeldifferenz zwischen diesen beiden Beobachtungsknoten kaum beeinflussen. Durch eine umfassende Beobachtung möglichst vieler Beobachtungsknoten bzw. deren Knotenphasenwinkel wird aber auch dasjenige Paar beobachtet, bei dem die betreffende Leitung, die nun ausgefallen ist, unmittelbar zwischen den beiden Beobachtungsknoten angeordnet ist. Hier stellt sich dann die erhöhte Knotenphasenwinkeldifferenz ein. Und dadurch kann der Ausfall dieser Leitung erkannt werden. Mit anderen Worten werden möglichst viele Knotenphasenwinkeldifferenzen überwacht und jede darauf überprüft, ob sie sich signifikant erhöht.

Insbesondere wird vorgeschlagen, dass der Offsetwinkel einen Wert von wenigstens 3° aufweist, insbesondere von wenigstens 5° aufweist und/oder dass der Offsetwinkel wenigstens 25 %, insbesondere wenigstens 35 % der Knotenphasenwinkeldifferenz nach der Erhöhung aufweist. Eine Erhöhung um 3° oder sogar 5° ist eine vergleichsweise große Erhöhung und gibt daher einen signifikanten Wert an, der auf einen Ausfall einer Leitung schließen lässt. Solche Werte können situationsabhängig und abhängig von der konkreten Netztopologie unterschiedlich ausfallen, aber ein Wert von wenigstens 3°, insbesondere wenigstens 5° kann als gute Testschwelle dienen.

Die Erhöhung der Knotenphasenwinkeldifferenz kann aber auch von der Höhe der Knotenphasenwinkeldifferenz abhängen und daher wird gemäß einer Alternative, die die absoluten Zahlen aber umfassen kann, vorgeschlagen, dass der Offsetwinkel wenigstens 25 %, insbesondere wenigstens 35 % der durchschnittlichen Knotenphasenwinkeldifferenz beträgt. Auch dies ist ein signifikanter Wert, um den die Erhöhung vorliegen soll, bevor ein Ausfall einer Leitung abgeleitet wird.

Gemäß einem Aspekt wird vorgeschlagen, dass in Abhängigkeit von der wenigstens einen Knotenphasenwinkelbeziehung die wenigstens eine Netzstörung in der Netztopologie lokalisiert wird. Dazu wurden oben schon Beispiele erläutert, demnach besonders bei einer wellenmäßigen Ausbreitung der Ursprung der Welle erkannt werden kann und dort die Netzstörung zu lokalisieren ist.

Im Falle eines Ausfalls von Leitungen ist die Netzstörung, nämlich dieser Ausfall, dort zu lokalisieren, wo die erhöhte Knotenphasenwinkeldifferenz auftritt. Sie tritt als Differenz zwischen zwei Beobachtungsknoten auf und zwischen diesen Beobachtungsknoten ist dann auch die Netzstörung zu lokalisieren.

Gemäß einem Aspekt wird vorgeschlagen, dass in Abhängigkeit von der wenigstens einen erfassten Netzstörung eine Bewertung einer Netzstabilität des elektrischen Versorgungsnetzes erfolgt, wobei die Bewertung in Abhängigkeit von wenigstens einer erfassten Störungseigenschaft der Netzstörung erfolgt. Mögliche Störungseigenschaften der Netzstörung ergeben sich aus der folgenden Eigenschaftsliste.

Eine mögliche Störungseigenschaft der Netzstörung ist ein erfasster Ort der Netzstörung. Möglichkeiten, einen Ort der Netzstörung zu erfassen, also eine Netzstörung in der Netztopologie zu lokalisieren, wurden oben bereits beschrieben. Der Ort einer Netzstörung kann schon deswegen wichtig sein, um dieser Netzstörung zu begegnen, weil häufig etwaige Gegenmaßnahmen auch in der Nähe des Ortes relevant werden können. Auch etwaige zugrundeliegende Fehler sind dort zu lokalisieren und können entsprechend dort gefunden und gegebenenfalls behoben werden.

Eine mögliche Störungseigenschaft der Netzstörung ist eine Netzstörungsart. Hier kommen insbesondere die Netzstörungsarten in Betracht, die oben bereits erläutert wurden. Ist die Netzstörungsart bekannt, kann auch gezielt auf sie reagiert werden, einschließlich einer weiteren Ausbreitung entgegenzuwirken.

Eine mögliche Störungseigenschaft der Netzstörung ist eine Amplitude der erfassten Netzstörung. Solche Amplituden, und was bei Netzstörungen als Amplitude verstanden werden kann, wurde oben bereits erläutert. Eine Amplitude der erfassten Netzstörung kann synonym auch als eine Stärke der erfassten Netzstörung bezeichnet werden.

Es wird nun vorgeschlagen, dass in Abhängigkeit von wenigstens einer dieser möglichen Störungseigenschaften der Netzstörung eine Bewertung der Netzstabilität vorgenommen wird. Insbesondere ist hier darunter zu verstehen, ob die Netzstabilität gegeben, gefährdet oder nicht gegeben ist. Wenn die Netzstabilität gefährdet ist, kann versucht werden, den Störungen entgegenzuwirken und/oder anderweitig die Stabilität zu erhöhen. Wurde beispielsweise als Störung die Unterbrechung bzw. der Ausfall eines Leistungsübertragungspfads festgestellt und auch lokalisiert, kann versucht werden, diesen Leistungsübertragungspfad wieder herzustellen.

Ist das aber nicht möglich, so kann es sein, dass die Stabilität gefährdet ist, weil die Leistung, die über diesen ausgefallenen bzw. getrennten Leistungsübertragungspfad nicht mehr übertragen werden kann, über andere Pfade übertragen wird, die wiederum dadurch an ihre Leistungsgrenze gebracht werden können. Die Stabilität ist dann dadurch gefährdet, dass Sicherheitsabschaltungen auftreten können. Solche Sicherheitsabschaltungen können dazu führen, dass noch weniger Leistungsübertragungspfade und damit noch weniger Übertragungskapazität zur Verfügung steht. Es wird also noch mehr Leistung umverteilt und dadurch können weitere Sicherheitsabschaltungen auftreten. Im schlimmsten Fall ergibt sich dann eine Kettenreaktion bis zum Blackout.

Wenn also, um bei diesem Beispiel zu bleiben, der Leistungsübertragungspfad nicht oder nicht schnell genug wiederhergestellt werden kann, so kann stattdessen zur Verbesserung der Stabilität eine Leistungseinspeisung reduziert werden und gegebenenfalls auch eine Leistungsaufnahme durch Verbraucher reduziert werden. Dadurch kann erreicht werden, dass weniger Leistung überhaupt übertragen werden muss, die somit die verbleibenden Leistungsübertragungspfade nicht mehr an eine gefährliche Grenze bringt.

Dieses Beispiel zeigt auch wenigstens einen Vorteil der Erfindung, nämlich, dass über die Überwachung der Knotenphasenwinkel an den Beobachtungsknoten, also möglichst an vielen Beobachtungsknoten, sich eine Netzstörung erkennen lässt, sie sich lokalisieren lässt und Gegenmaßnahmen eingeleitet werden können. Insbesondere ist hierdurch auch ein insgesamt automatisierbares Verfahren möglich. So können insbesondere Windenergieanlagen oder Windparks, teilweise gilt das auch für Photovoltaikanlagen, eine solche Netzstörung erkennen, lokalisieren und die genannte Leistungsreduzierung des Einspeisens durch Reduzierung ihrer eigenen eingespeisten Leistung auch sofort umsetzen.

Dabei ist auch hervorzuheben, dass Windenergieanlagen sehr schnell reagieren können, eine solche Leistungsreduzierung jedenfalls sehr schnell durchführen können. Eine Adhoc-Reduzierung der Leistungseinspeisung ist fast verzögerungsfrei in der Größenordnung von 10 bis 50 ms möglich. Eine dauerhafte Reduzierung auch der Leistungserzeugung ist in wenigen Sekunden möglich, zum Beispiel in 3 Sekunden oder 5 Sekunden. Ein weiterer Aspekt ist, dass Windenergieanlagen weit über das elektrische Versorgungsnetz verteilt sein können, also dass dadurch auch örtlich gezielt eingegriffen werden kann. So kommt auch eine örtlich selektive Maßnahme in Betracht, also beispielsweise in einem gezielten Bereich die Leistung zu reduzieren. Bezug nehmend auf das genannte Beispiel nämlich genau in dem Bereich, von dem aus die Leistung über den ausgefallenen Leistungsübertragungspfad transportiert werden müsste.

Es kommen aber auch andere Maßnahmen in Betracht, wie beispielsweise gezielt einen Kurzschlussstrom bereitzustellen. Eine solche Maßnahme kann genutzt werden, um Trennschalter, die in Abhängigkeit von einer Stromhöhe auslösen, gezielt zum Auslösen zu bringen und dadurch eine entsprechende Schalthandlung auszulösen.

Auch gegen Netzpendelungen, die auch als Leistungspendelungen bezeichnet werden können, können gut Maßnahmen eingeleitet werden, weil jedenfalls Windenergieanlagen kurzfristig und zeitlich präzise ihre Leistungseinspeisung erhöhen und verringern können, um quasi im Gegentakt, um es vereinfacht und anschaulich auszudrücken, Leistung einzuspeisen. Auch hier kann die örtliche Verteilung von Windenergieanlagen im Netz vorteilhaft eingesetzt werden, um die Leistungseinspeisung genau dort zu erhöhen oder zu verringern, wo dies notwendig ist. Vorsorglich wird darauf hingewiesen, dass solche Leistungspendelungen mit einer Frequenz in der Größenordnung von wenigen Sekunden auftreten. Die betreffenden Windenergieanlagen müssten also, wenn sie dem entgegenwirken sollen, für wenige Sekunden ihre Leistung erhöhen oder verringern. Aufgrund der großen kinetischen Energie in dem drehenden Rotor jeder Windenergieanlage kann eine solche Leistungserhöhung durchgeführt werden.

Besonders wurde auch erkannt, dass sowohl Pendelungen als auch lokal sehr schwache Netzbedingungen die Gesamtstabilität gefährden können. Auch die Erkennung kaskadierter Abschaltungen oder anderer kaskadierter Schaltungen kann ein Zeichen für das Erreichen einer Stabilitätsgrenze sein.

Ein Problem können schwache Netzbedingungen sein. Diese können durch eine Auswertung der maximalen Spannungswinkeldifferenz an spezifischen Netzknoten sofort erkannt werden. Die maximale Spannungswinkeldifferenz ist somit der Maximalwert, der für eine Phasenwinkeldifferenz auftreten kann. Die spezifischen Netzknoten können jeweils Beobachtungsknoten sein, besonders solche Beobachtungsknoten, an denen große Phasenwinkeldifferenzen zu einem benachbarten Beobachtungsknoten auftreten.

Dadurch können Orte mit schwachen Netzbedingungen bekannt sein. Gegebenenfalls können Einsenkungen, also Verringerungen der eingespeisten Leistung und gegebenenfalls auch der verbrauchten Leistung, oder andere Stabilisierungsmaßnahmen bedarfsgerecht aktiviert werden, um einen Verlust der Stabilität zu verhindern. Kommt es zu sehr großen Differenzen, also sehr großen Phasenwinkeldifferenzen, können topologische Umschaltungen eine Instabilität verhindern. Hier kommt also in Betracht, dass entweder ein instabil zu werden drohender Teil abgetrennt wird, oder dass durch die topologische Umschaltung insgesamt die Stabilität erhöht wird.

Problematisch bzw. sinnvoll zu beobachten kann auch eine dynamische Stabilität sein. Kommt es bei großen Leistungsübertragungen, die durch große Phasenwinkeldifferenzen erkannt werden können, zusätzlich zu Pendelungen (also Netzpendelungen bzw. Leistungspendelungen) oder anderen überlagerten dynamischen Effekten, kann sich ein elektrisches Versorgungsnetz oder Netzabschnitt der dynamischen Stabilitätsgrenze nähern. Eine solche dynamische Stabilitätsgrenze ist die Grenze, bei der sich ein Netz über 90° "verdreht". Wenn also Unterschiede zwischen den Knotenphasenwinkeln von einem Ort in dem elektrischen Versorgungsnetz zu einem anderen Ort in dem elektrischen Versorgungsnetz um +/-90°, also 180 ° oder mehr unterscheiden, ist eine solche dynamische Stabilitätsgrenze erreicht bzw. überschritten.

Es liegt also insofern eine dynamische Stabilität bzw. eine dynamische Veränderung vor, die insbesondere nicht auf eine konkrete Topologie zurückzuführen ist, in der insbesondere Überlastungen einzelner Leistungsübertragungspfade vorliegen. Stattdessen kann eine fehlerfreie oder störungsfreie Netztopologie vorliegen, dynamische Effekte wie Pendelungen das Netz gleichwohl an eine Stabilitätsgrenze bringen. Pendelungen können auf Eigenschaften des elektrischen Versorgungsnetzes zurückgeführt werden, wie beispielsweise insbesondere auf angeschlossene Erzeuger, sie können aber möglicherweise erst durch einen Vorgang angeregt werden, wie beispielsweise das Abschalten eines großen Verbrauchers.

Gezielte Dämpfungsmaßnahmen oder topologische Umschaltungen oder Einsenkungen, also Reduzierungen der Leistungseinspeisung, können notwendig werden. Dämpfungsmaßnahmen wurden oben bereits beschrieben. Sie betreffen insbesondere eine frequenzabhängige Leistungseinspeisung, nämlich -veränderung, und eine spannungsabhängige Blindleistungseinspeisung bzw. -veränderung.

Obwohl der Grund für das Erreichen einer dynamischen Stabilitätsgrenze nicht in einer ungünstigen Topologie liegen muss, kann gleichwohl eine topologische Umschaltung das Problem lösen. Um bei dem Beispiel der Pendelung zu bleiben, kann durch die topologische Umschaltung die Pendelstrecke unterbrochen werden und damit die Pendelung unterbrochen werden.

Auch kann beispielsweise eine Leistungseinsenkung hilfreich sein, wenn sie zum Beispiel das auslösende Ereignis, bei dem ein Verbraucher abgeschaltet wurde, ganz oder teilweise kompensiert.

Gemäß einem Aspekt wird somit vorgeschlagen, dass in Abhängigkeit von der wenigstens einen erfassten Netzstörung und/oder in Abhängigkeit von der Bewertung der Netzstabilität eine Stabilisierungsmaßnahme durchgeführt wird. Beispiele dafür wurden oben bereits genannt. Stabilisierungsmaßnahmen können auch dann durchgeführt werden, wenn nur eine Netzstörung erfasst wurde, ohne dass bereits eine niedrige Netzstabilität festgestellt wurde.

Insbesondere kann eine der folgenden Stabilisierungsmaßnahmen durchgeführt werden.

Eine mögliche Stabilisierungsmaßnahme ist das Öffnen oder Schließen wenigstens eines Trennschalters des elektrischen Versorgungsnetzes. Dadurch kann eine Topologie verändert werden. Beispielsweise können dadurch gefährdete Netzabschnitte abgetrennt werden, oder Netzabschnitte zugeschaltet werden, wenn diese abgetrennt waren und ihr Wiederverbinden vorteilhaft ist. Ein solches Wiederverbinden kann besonders dann vorteilhaft sein, wenn der eine Netzabschnitt gerade über ein Leistungsüberangebot verfügt, während der andere Netzabschnitt gerade über einen hohen Leistungsbedarf verfügt.

Eine mögliche Stabilisierungsmaßnahme ist das Trennen oder Zuschalten eines Erzeugers. Besonders dann, wenn ein Leistungsüberangebot existiert, das gegebenenfalls auch nur lokal vorliegen kann, kann das Trennen eines Erzeugers sinnvoll sein. Umgekehrt kann das Zuschalten eines Erzeugers bei einem erhöhten Leistungsbedarf sinnvoll sein.

Entsprechend wird als eine mögliche Stabilisierungsmaßnahme vorgesehen, einen Verbraucher zu trennen oder zuzuschalten. Diese Maßnahme wirkt sinngemäß, nämlich so, dass bei einem Leistungsüberangebot ein Verbraucher zugeschaltet werden kann, und bei einem Leistungsunterangebot, also einem erhöhten Bedarf an Leistung, ein Verbraucher getrennt werden kann.

Das Trennen oder Zuschalten eines Erzeugers und das Trennen oder Zuschalten eines Verbrauchers kann auch je nach Netzstörung koordiniert werden bzw. kombiniert werden. Ein Beispiel wurde oben bereits genannt, demnach bei überlasteten Leistungsübertragungspfaden das Trennen eines Erzeugers und das Trennen eines Verbrauchers sinnvoll sein kann, um dadurch die Leistungsübertragung zu reduzieren.

Das Zuschalten eines Erzeugers, Gleiches gilt für einen Verbraucher, kann auch ohne Leistungseinspeisung oder -entnahme als Vorsichtsmaßnahme sinnvoll sein, um zu gewährleisten, dass bei einem plötzlichen Bedarf Leistung durch den zugeschalteten Erzeuger eingespeist werden kann, oder durch den Verbraucher Leistung aufgenommen werden kann. Es kommt auch in Betracht, dass der Erzeuger gegebenenfalls sogar der Verbraucher, eine reine Blindleistungseinspeisung bzw. -entnahme durchführt und dadurch ähnlich wie ein Phasenschieberwirkt. Dadurch kann eine Spannungsregulierung durchgeführt werden.

Eine mögliche Stabilisierungsmaßnahme ist das Vorgeben und Umsetzen einer Änderung eingespeister Wirkleistung. Dieses Vorgeben kann aber so ausgestaltet sein, dass entsprechende Vorgabewerte bzw. Änderungswerte als Sollwerte an diverse Erzeuger gegeben werden. Diese Erzeuger setzen dann die Änderung der eingespeisten Wirkleistung um. Hier können ähnliche Wirkungen erzielt werden wie bei dem Trennen oder Zuschalten eines Erzeugers. Durch das Vorgeben einer Änderung kann aber auch, was ebenfalls als vorteilhaft vorgeschlagen wird, die Art der Änderung vorgegeben werden. Beispielsweise kann vorgegeben werden, dass die eingespeiste Wirkleistung mit einer ansteigenden Rampe erhöht wird oder verringert wird. Beispielsweise kann vorgegeben werden, dass die eingespeiste Wirkleistung in 10 Sekunden um 50 % angehoben wird oder in 10 Sekunden um 50 % abgesenkt wird, jeweils kann das auf eine Nennleistung bezogen sein.

Eine mögliche Stabilisierungsmaßnahme ist das Vorgeben einer Änderung eingespeister Blindleistung. Auch hier kann die Blindleistung über eine Änderungsfunktion geändert werden. Auch hier kommt insbesondere eine Änderung über eine zeitliche Rampe in Betracht, sowohl zur Erhöhung als auch zur Verringerung. Durch das Ändern der eingespeisten Blindleistung kann besonders eine Spannung gesteuert werden. Das gezielte Ändern über eine Änderungsfunktion, insbesondere über eine zeitliche Rampe, verhindert einen Spannungssprung und damit auch eine mögliche Überreaktion des elektrischen Versorgungsnetzes.

Natürlich können die Knotenphasenwinkel auch verwendet werden, um eine solche Änderung der eingespeisten Wirkleistung und/oder der eingespeisten Blindleistung zu überwachen, insbesondere in ihrem Effekt zu überwachen.

Eine mögliche Stabilisierungsmaßnahme ist das Implementieren oder Einstellen einer Dämpfungsmaßnahme, bei der eine frequenzabhängige Leistungsregelung und/oder eine spannungsabhängige Blindleistungsregelung jeweils in ihrem Übertragungsverhalten, insbesondere in ihrem Verstärkungsfaktor, eingestellt wird.

Erhöht sich die Frequenz, kann als Gegenmaßnahme sinnvoll sein, die eingespeiste Leistung zu reduzieren. Eine Frequenzerhöhung kann ein Indikator für ein Leistungsüberangebot sein. Wird aber die vorgeschlagene Leistungsreduzierung zu schnell und/oder zu stark ausgeführt, so kann es zu einem Leistungsunterangebot kommen. Die Frequenz fällt dann wieder ab, was dann wiederum als Gegenmaßnahme eine Leistungserhöhung verursachen kann. Ob ein solches angedeutetes Aufschwingen resultiert, hängt von der Verstärkung dieser frequenzabhängigen Leistungsregelung ab. Es kann auch von einem Totband abhängen, das nämlich einen Frequenzbereich vorgibt, innerhalb dessen keine frequenzabhängige Leistungsänderung vorgenommen werden soll. Ist die Verstärkung also ausreichend klein gewählt, kommt es nicht zu dem Aufschwingen, sondern kann zu einer entsprechenden Bedämpfung führen. Ist der Verstärkungsfaktor zu klein gewählt, entfaltet die vorgeschlagene Maßnahme möglicherweise nicht oder nicht ausreichend oder nicht ausreichend schnell ihre Wirkung.

Ganz ähnlich kann eine spannungsabhängige Blindleistungsregelung vorgesehen sein. Steigt die Spannung an, kann dem durch eine Blindleistungsentnahme entgegengewirkt werden. Auch hier sollte diese nicht zu schnell oder zu stark durchgeführt werden, aber auch nicht zu langsam oder zu schwach.

Hier kommt besonders auch in Betracht, dass entsprechende Netzeigenschaften, also die Dynamik des elektrischen Versorgungsnetzes in der beschriebenen Hinsicht, vorher erfasst werden, gegebenenfalls für unterschiedliche Fälle erfasst werden, und entsprechende Dämpfungsmaßnahmen voreingestellt sind. Sie können dann als Stabilisierungsmaßnahme implementiert bzw. dann eingeschaltet werden. Das Implementieren oder Einstellen einer Dämpfungsmaßnahme beinhaltet natürlich auch, diese wieder auszustellen oder neu einzustellen.

Gemäß einem Aspekt wird vorgeschlagen, dass das Erfassen wenigstens einer, insbesondere wenigstens 50 %, vorzugsweise wenigstens 80 %, der Knotenspannungen und Knotenphasenwinkel jeweils mittels einer an das elektrische Versorgungsnetz an dem jeweiligen Beobachtungsknoten angeschlossenen Windenergieanlage oder Windpark erfolgt. Hier liegt besonders die Erkenntnis zugrunde, dass Windenergieanlagen oder Windparks über ein elektrisches Versorgungsnetz weit verteilt aufgestellt sein können. Zur Einspeisung erfassen sie üblicherweise ohnehin die Spannung am Netzanschlusspunkt, oder eine äquivalente Spannung, nach Betrag und Phase. Somit stehen durch diese Windenergieanlagen bzw. Windparks bereits sehr viele potentielle Messanordnungen zur Verfügung. Sie können genutzt werden. Zudem sind viele Windenergieanlagen und Windparks auch hinsichtlich Datenübertragung miteinander vernetzt und können gemeinsam gesteuert werden. Es wurde somit erkannt, dieses Potential auszuschöpfen.

Die Erfassung der Spannung am Netzanschlusspunkt nach Betrag und Phase wird nun so ergänzt, dass die erfasste Phase, also der erfasste Phasenwinkel, in Bezug auf einen Referenzphasenwinkel betrachtet wird. Im einfachsten Fall kann hierfür für alle Beobachtungspunkte ein genaues Zeitsignal vorgegeben werden, zu dem der Referenzphasenwinkel den Wert null aufweist. Jede Windenergieanlage oder andere Messeinrichtung kann darauf basierend einen Referenzphasenwinkel mit umlaufen lassen und den erfassten Phasenwinkel dazu in Bezug setzen. Das Ergebnis ist der Knotenphasenwinkel des entsprechenden Beobachtungsknotens. Während der erfasste Phasenwinkel und der Referenzphasenwinkel mit der Netzfrequenz umlaufen, beschreibt der Knotenphasenwinkel die Differenz zwischen diesen beiden umlaufenden Winkeln, sodass der Knotenphasenwinkel selbst nicht umläuft und im Wesentlichen einen konstanten Wert aufweist, es sei denn, es ergeben sich Änderungen oder transiente Vorgänge im elektrischen Versorgungsnetz.

Um diese Berücksichtigung eines Referenzphasenwinkels erweitert können somit die vielen vorhandenen Windenergieanlagen und Windparks einen Knotenphasenwinkel für den jeweiligen Beobachtungsknoten liefern. Derjeweilige Beobachtungsknoten kann insbesondere der Netzanschlusspunkt sein.

Somit wird vorgeschlagen, im Idealfall sämtliche Knotenspannungen durch Windenergieanlagen und Windparks aufzunehmen. Zumindest ist es vorteilhaft, wenn ein hoher Anteil von zum Beispiel wenigstens 50 % oder wenigstens 80 % aller Beobachtungsknoten und damit Knotenspannungen bzw. Knotenphasenwinkel durch Windenergieanlagen oder Windparks aufgenommen wird. Technisch ist dies zwar nicht unbedingt notwendig, aber es hat den Effekt, dass vorhandene Messtechnik und vorhandene Kommunikationsinfrastruktur verwendet werden kann, um auch eine übergreifende Auswertung des elektrischen Versorgungsnetzes mit wenig Kostenaufwand durchführen zu können. Auch ist üblicherweise die Verlässlichkeit der Messaufnahme durch Windenergieanlagen bzw. Windparks gewährleistet.

Außerdem oder alternativ kann ein solches umfassendes Netz von Windenergieanlagen und Windparks auch zum Durchführen von Stabilisierungsmaßnahmen verwendet werden. Besonders dann, wenn diese bereits die Knotenphasenwinkel aufnehmen und in einer Kommunikationsstruktur bereitstellen, können sie durch diese auch angesteuert werden.

Es kommt hinzu, dass viele Stabilisierungsmaßnahmen darin bestehen können, eine Wirkleistung kurzfristig zu erhöhen oder zu verringern und/oder eine Blindleistung zu erhöhen und zu verringern und/oder einen Kurzschlussstrom kurzfristig bereitzustellen. All solche Stabilisierungsmaßnahmen können von Windenergieanlagen und Windparks sehr schnell und sehr zuverlässig durchgeführt werden. Dass dies meist sehr zuverlässig durchgeführt werden kann, wird häufig dadurch gewährleistet, dass diese Funktionalität dem Grunde nach eine Anschlussbedingung sein kann, die erfüllt werden muss, wenn die Windenergieanlage oder der Windpark ans elektrische Versorgungsnetz angeschlossen wird.

Selbst für den Fall, dass die Windenergieanlagen oder Windparks die Knotenphasenwinkel nicht oder nur teilweise aufnehmen sollten, können sie dennoch Stabilisierungsmaßnahmen bereitstellen. Wie oben schon angesprochen, haben sie auch den Vorteil, dass sie örtlich weit verteilt sind und dadurch auch örtlich gezielt und selektiv Stabilisierungsmaßnahmen bereitstellen können.

Gemäß einem Aspekt wird vorgeschlagen, dass das Verfahren wenigstens 50 Beobachtungsknoten verwendet, an denen jeweils ein Knotenphasenwinkel erfasst und zum Überwachen verwendet wird. Hier wurde besonders erkannt, dass eine sehr große Anzahl von Beobachtungsknoten die Möglichkeit einer umfassenden Überwachung des elektrischen Versorgungsnetzes bzw. des betreffenden Netzabschnitts ermöglicht. 50 Beobachtungsknoten oder mehr mit entsprechender Messsensorik auszustatten kann aufwendig sein, was somit gegen einen solchen Vorschlag spricht. Insbesondere aber bei Verwendung von Windenergieanlagen oder Windparks, die all diese Messtechnik bereits aufweisen, fällt dieser Aufwand aber nicht an. Allenfalls eine Softwareanpassung scheint erforderlich zu sein, um den Referenzphasenwinkel bereitzustellen.

Dadurch wird es möglich, sehr viele solcher Beobachtungsknoten bereitzustellen bzw. davon entsprechende Knotenphasenwinkel zur Auswertung bereitzustellen. Es kommt auch in Betracht, dass wenigstens 100, oder wenigstens 500 Beobachtungsknoten verwendet werden. Hier wurde besonders erkannt, dass gerade bei der Verwendung von Windenergieanlagen oder Windparks für diese Aufgabe teilweise ein sehr großes flächendeckendes Netz notwendiger Messtechnik bereits zur Verfügung steht und oftmals sogar bereits untereinander kommuniziert und dieses große Netz kann eine solche umfassende Überwachung mit den vielen Beobachtungsknoten gewährleisten und damit zu einer sehr vorteilhaften flächendeckenden Überwachung eingesetzt werden. Insbesondere das Beobachten von Ausbreitungswellen von Veränderungen der Knotenphasenwinkel oder Knotenphasenwinkeldifferenzen kann dadurch sehr gut und sinnvoll durchgeführt werden.

Erfindungsgemäß wird auch eine Überwachungsanordnung zum Überwachen eines dreiphasigen elektrischen Versorgungsnetzes vorgeschlagen, wobei
- das elektrische Versorgungsnetz
   - eine Netztopologie mit örtlich verteilten Netzknoten aufweist, und
   - mehrere der Netzknoten als Beobachtungsknoten ausgebildet sind, an denen jeweils wenigstens eine Spannung nach Betrag und Phase erfasst werden kann,
   umfassend
- für jeden Beobachtungsknoten jeweils eine Erfassungseinrichtung, vorbereitet zum Erfassen jeweils wenigstens einer Knotenspannung an dem jeweiligen Beobachtungsknoten, sodass mehrere Knotenspannungen erfasst werden, wobei
   - jede Knotenspannung durch einen Knotenphasenwinkel gekennzeichnet ist, als Phasenwinkel der Knotenspannung, und
   - jeder Knotenphasenwinkel jeweils einen Phasenwinkel in Bezug auf einen Referenzphasenwinkel einer Spannung beschreibt, sodass
   - mehrere über die Netztopologie verteilte Knotenphasenwinkel vorhanden sind,
- eine Auswerteeinrichtung, vorbereitet zum Ermitteln wenigstens einer Phasenwinkelbeziehung, die jeweils eine Beziehung zwischen wenigstens zwei der über die Netztopologie verteilten Knotenphasenwinkeln beschreibt, und
- eine Prüfeinrichtung, vorbereitet zum Überprüfen des elektrischen Versorgungsnetzes auf eine Netzstörung in Abhängigkeit von der wenigstens einen Phasenwinkelbeziehung.

Jede Erfassungseinrichtung weist somit einen Spannungsaufnehmer auf, der geeignet ist, eine Spannung nach Betrag und Phase aufzunehmen. Außerdem kann ein Referenzphasenwinkel berücksichtigt werden, um den Phasenwinkel dazu in Bezug zu setzen und einen Knotenphasenwinkel zu erzeugen. Dazu kann ein entsprechender Auswerteprozessor vorgesehen sein. Dieser kann den Referenzphasenwinkel erhalten, oder sich selbst erzeugen. Dazu kann er insbesondere ein genaues Zeitsignal empfangen, um dadurch eine Synchronisierung mit den übrigen Erfassungseinrichtungen der Überwachungsanordnung durchzuführen. Es ist aber nicht unbedingt erforderlich, den Knotenphasenwinkel, der die jeweilige Knotenspannung kennzeichnet, ausdrücklich zu erfassen. Für das Untersuchen von Beziehungen der Knotenphasenwinkel untereinander können sie erfasst werden, die Beziehungen können aber auch anderweitig ermittelt werden.

Die Auswerteeinrichtung kann eine Phasenwinkelbeziehung ermitteln. Das kann aus erfassten Knotenphasenwinkeln sein, oder anderweitig wie bspw. über einen unmittelbaren Vergleich der Knotenspannungen.

Die Auswerteeinrichtung kann an einem zentralen Ort angeordnet sein und beispielsweise mit allen Erfassungseinrichtungen über eine Kommunikationsinfrastruktur verbunden sein. Hier kommen einzelne Datenübertragungswege zwischen der Auswerteeinrichtung und jeder Erfassungseinrichtung in Betracht. Hier kann auch ein sogenanntes SCADA-System verwendet werden.

Die Prüfeinrichtung kann lokal bei der Auswerteeinrichtung angeordnet sein und einen Prozessrechner aufweisen oder in einem Prozessrechner realisiert sein. Die Prüfeinrichtung kann dafür alle Phasenwinkelbeziehungen von der Auswerteeinrichtung empfangen und anhand dessen das elektrische Versorgungsnetz auf eine Netzstörung überprüfen.

Insbesondere ist die Überwachungsanordnung dazu vorbereitet, ein Verfahren nach wenigstens einem der vorstehend beschriebenen Ausführungsformen auszuführen. Dazu kann das Verfahren zu Teilen in den Erfassungseinrichtungen, der Auswerteeinrichtung und der Prüfeinrichtung implementiert sein. Insbesondere die Art der Erfassung der Knotenphasenwinkel kann in der Erfassungseinrichtung implementiert sein, das Ermitteln der Phasenwinkelbeziehungen in der Auswerteeinrichtung und die übrigen Schritte, insbesondere das Überprüfen des elektrischen Versorgungsnetzes auf eine Netzstörung, können in der Prüfeinrichtung implementiert sein.

Gemäß einem Aspekt wird vorgeschlagen, dass eine, mehrere oder alle der Erfassungseinrichtungen in einer Windenergieanlage oder einem Windpark realisiert sind, und/oder dass einer, mehrere oder alle der Beobachtungsknoten als Netzanschlusspunkte ausgebildet sind, über die jeweils ein Erzeuger, insbesondere jeweils eine Windenergieanlage oder ein Windpark in das elektrische Versorgungsnetz einspeisen.

Die Windenergieanlagen oder Windparks können dadurch auf einfache Art und Weise das Erfassen der Knotenspannung und auch der Knotenphasenwinkel durchführen. Das kann besonders jeweils an einem Netzanschlusspunkt durchgeführt werden. Außerdem oder alternativ können die Windenergieanlage oder der Windpark über diesen Netzanschlusspunkt jeweils Stabilisierungsmaßnahmen realisieren.

Die Erfindung wird nachfolgend anhand von Ausführungsbeispielen unter Bezugnahme auf die begleitenden Figuren beispielhaft näher erläutert.
- Figur 1: zeigt eine Windenergieanlage in einer perspektivischen Darstellung.
- Figur 2: zeigt einen Windpark in einer schematischen Darstellung.
- Figur 3: zeigt in drei Teildarstellungen A, B und C veranschaulichend für vier Beobachtungsknoten vier Knotenphasenwinkel und was daraus ableitbar sein kann.
- Figur 4: zeigt ein veranschaulichendes Ablaufdiagramm.
- Figur 5: zeigt einen Abschnitt eines elektrischen Versorgungsnetzes in einer vereinfachten und illustrativen Darstellung.

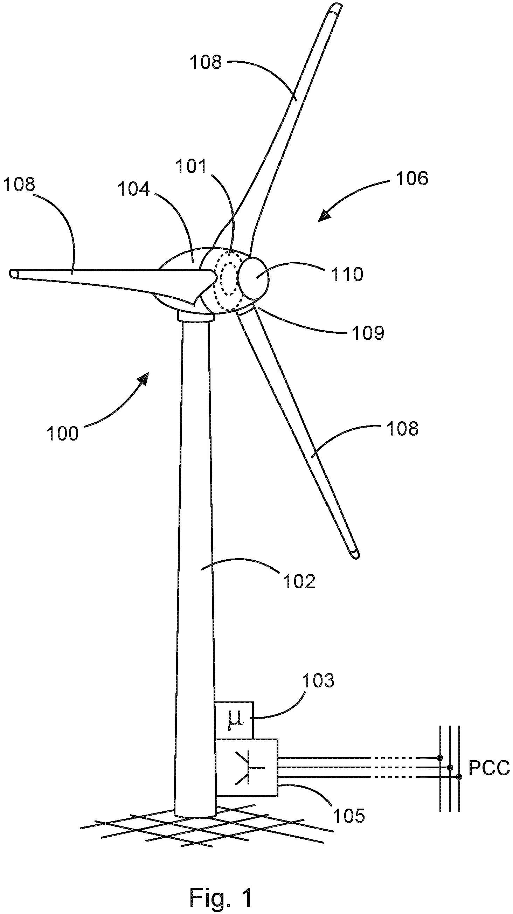

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten. Die Einspeiseeinheit 105 kann eine Erfassungseinrichtung bilden bzw. umfassen.

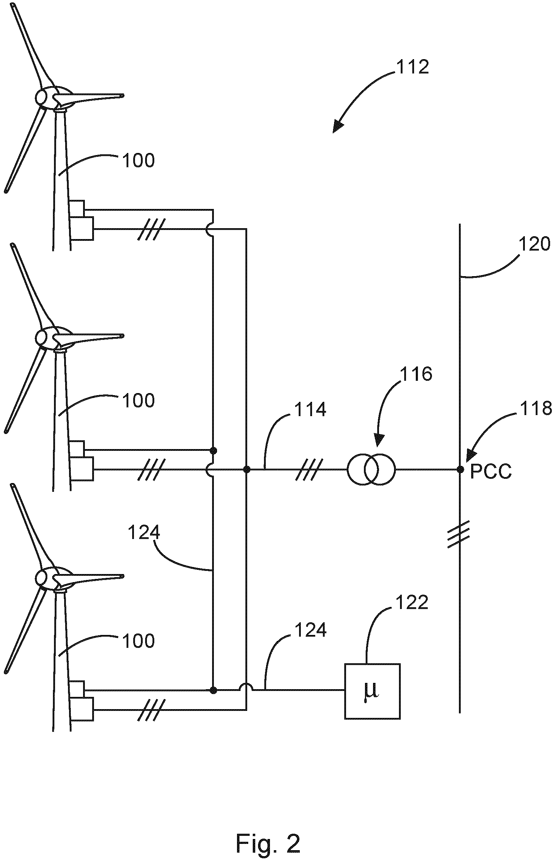

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen. Der zentrale Parkrechner kann eine Auswerteeinrichtung bilden oder umfassen.

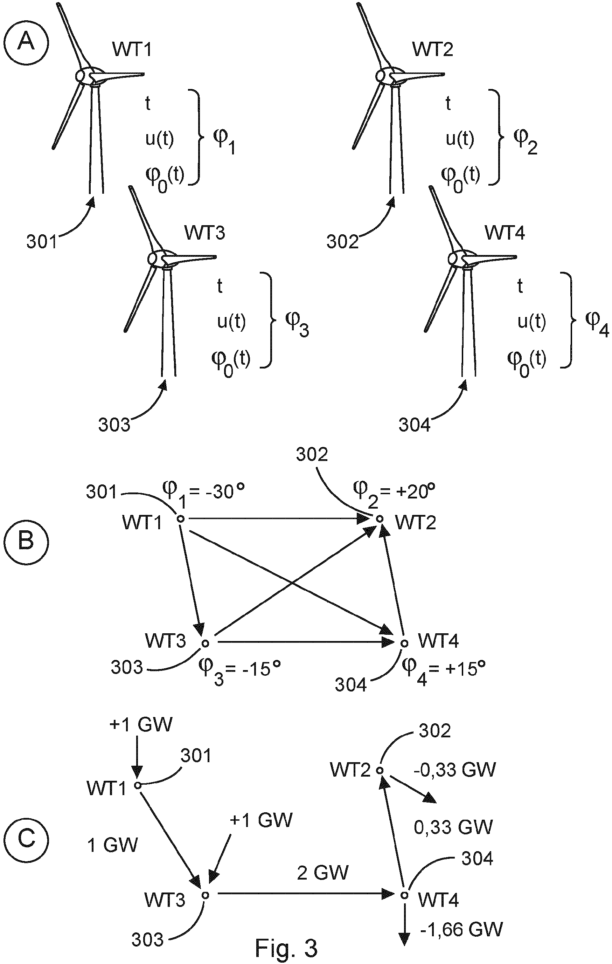

Figur 3 zeigt in den drei Teildarstellungen A, B und C jeweils dieselbe Anordnung von vier exemplarischen Beobachtungsknoten 301 bis 304. In dem Beispiel bildet jeder dieser Beobachtungsknoten 301 bis 304 einen Netzanschlusspunkt einer Windenergieanlage. Die Windenergieanlagen sind jeweils als WT1 bis WT4 gekennzeichnet. Jede Windenergieanlage, die auch repräsentativ für einen Windpark stehen kann, erfasst die Zeit t in hochgenauer Auflösung. Außerdem wird ständig die Spannung u(t) gemessen. Außerdem wird ein Referenzphasenwinkel ϕ₀(t) erfasst. Die Erfassung dieses Referenzphasenwinkels ϕ₀(t) ist an allen Beobachtungsknoten 301 bis 304 und damit an jeder der Windturbinen bzw. Windenergieanlagen WT1 bis WT4 gleich. Die erfasste Spannung u(t) weist einen umlaufenden Phasenwinkel auf und der Referenzphasenwinkel ϕ₀(t) läuft ebenfalls um. Daraus ist ein fester Knotenphasenwinkel ϕ₁ bis ϕ₄ erfassbar. Die Knotenphasenwinkel ϕ₁ bis ϕ₄ bilden also die Knotenphasenwinkel des entsprechenden Beobachtungsknotens 301 bis 304. Somit lässt sich jeweils einer der Knotenphasenwinkel ϕ₁ bis ϕ₄ aus den erfassten Variablen t, u(t) und ϕ₀(t) bestimmen. Das ist in dem ersten Teil A der Figur 3 für jede der vier Windenergieanlagen WT1 bis WT4 veranschaulicht.

In dem zweiten Abschnitt B der Figur 3 wurden beispielhaft vier Werte für die Knotenphasenwinkel angenommen, nämlich ϕ₁ = -30°, ϕ₂ = +20°, ϕ₃ = -15° und ϕ₄ = +15°. Für die theoretische Annahme, dass alle diese Beobachtungsknoten 301 bis 304 miteinander verbunden sind, ergäbe sich jeweils ein direkter Leistungsfluss von einem Beobachtungsknoten zu allen übrigen Beobachtungsknoten, die einen größeren Knotenphasenwinkel aufweisen. Das ist mit den entsprechenden Pfeilen in dem zweiten Abschnitt B angedeutet.

Der dritte Teil C der Figur 3 zeigt nun Leistungsflüsse für die Annahme, dass nicht alle Beobachtungsknoten 301 bis 304 miteinander verbunden sind. Hier wird davon ausgegangen, dass es nur eine Verbindung zwischen den Beobachtungsknoten 301 und 303, 303 und 304 sowie 304 und 302 gibt. Unter der Annahme jeweils vorhandener Verbindungsleitungen gleicher Impedanz ergibt sich in dem gezeigten Beispiel, dass ein Unterschied zweier Knotenphasenwinkel in Höhe von 15° zu einer Leistungsübertragung von 1 GW führt.

Entsprechend gibt es einen Leistungsfluss von 1 GW von dem Beobachtungsknoten 301 zum Beobachtungsknoten 303. In dem Beobachtungsknoten 303 kann also 1 GW eingespeist werden und diese Leistung fließt zum Beobachtungsknoten 303.

Am Beobachtungsknoten 303 wird ebenfalls eine Leistung von 1 GW eingespeist und kommt somit zu der Leistung hinzu, die der Beobachtungsknoten 303 bereits von dem Beobachtungsknoten 301 erhalten hat. Diese 2 GW fließen dann von dem Beobachtungsknoten 303 zum Beobachtungsknoten 304. Entsprechend ergibt sich auf dieser Verbindung ein Unterschied der Knotenphasenwinkel von 30°, nämlich von ϕ₃ = -15° bis ϕ₄= +15°.

An dem Beobachtungsknoten 304 wird somit angenommen, dass 1,6 GW abgeführt, also verbraucht werden, was durch -1,66 GW an dem Beobachtungsknoten 304 gekennzeichnet ist.

Der verbleibende 1/3 GW fließt dann von dem Beobachtungsknoten 304 zum Beobachtungsknoten 302. Am Beobachtungsknoten 302 wird somit noch 1/3 GW verbraucht, was durch -0,33 GW gekennzeichnet ist. Entsprechend ergibt sich als Differenz zwischen den beiden Knotenphasenwinkeln ϕ₄ und ϕ₂ nur ein Wert von 5°. Der Knotenphasenwinkel ϕ₄ beträgt also 15° und der Knotenphasenwinkel ϕ₂ 20°.

Die Darstellung ist natürlich eine Vereinfachung und besonders sollte möglichst keine der Windenergieanlagen WT1 bis WT4 Leistung aufnehmen. Die Windenergieanlagen WT1 bis WT4, die somit synonym auch als Windturbinen bezeichnet werden können, sind deswegen eingezeichnet, weil sie zum Erfassen der zum ersten Teil A erläuterten Größen verwendet werden. Beispielsweise kommt in Betracht, dass in der Nähe der beiden Beobachtungsknoten 302 und 304 jeweils entsprechende Verbraucher angeschlossen sind und betrieben werden, die jeweils die dargestellte abgegebene Leistung verbrauchen, gegebenenfalls zusätzlich zu der Leistung, die die jeweilige Windenergieanlage an dem Beobachtungsknoten selbst auch noch erzeugt.

Somit wurde erkannt, dass nun aufgrund der erfassten Knotenphasenwinkel ϕ₁ bis ϕ₄ ein konkreter Lastfluss abgeleitet werden kann. Veränderungen des Netzabschnitts, der hier durch die drei Übertragungsleitungen veranschaulicht ist, können zu Veränderungen der Beziehung der vier illustrierten Knotenphasenwinkel untereinander führen, also hier insbesondere zu einer Veränderung der jeweiligen Differenzen zweier benachbarter Knotenphasenwinkel. Ergeben sich also solche Veränderungen dieser Phasenwinkelbeziehungen, so lässt dies einen Rückschluss auf Veränderungen des Netzabschnitts zu.

Eine Veränderung könnte beispielsweise sein, dass der erste Knotenphasenwinkel ϕ₁ von -30° auf-15° ansteigt. Wenn die übrigen Knotenphasenwinkel ϕ₂ bis ϕ₄ unverändert bleiben und damit auch ihre Verhältnisse untereinander, ließe sich daraus ableiten, dass zwischen den Beobachtungsknoten 301 und 303 keine Leistung mehr fließt. In dem Beobachtungsknoten 303 würde somit die eingespeiste Leistung um 1 GW angestiegen sein, denn die Beziehung der Knotenphasenwinkel ϕ₃ und ϕ₄ der Beobachtungsknoten 303 und 304 hat sich nicht verändert, sodass also weiterhin 2 GW von dem Beobachtungsknoten 303 zum Beobachtungsknoten 304 fließen.

Je nachdem, wie schnell sich die Beziehung zwischen den beiden Knotenphasenwinkeln ϕ₁ und ϕ₃ verändert hat, sind Rückschlüsse auf die Art eines Fehlers möglich. Ist der Knotenphasenwinkel ϕ₁ allmählich angestiegen, so wurde an dem Beobachtungsknoten 301 die eingespeiste Leistung heruntergefahren. Ist er sprunghaft angestiegen, so ist möglicherweise ein großer Erzeuger vom Netz getrennt worden.

Vorsorglich wird darauf hingewiesen, dass eine Windenergieanlage derzeit nicht in der Lage ist, eine Leistung von 1 GW zu erzeugen. Dafür bedürfte es zumindest eines ausgesprochen großen Windparks. Auch insoweit soll Figur 3 nur veranschaulichen, dass die Windenergieanlagen Messungen vornehmen können. Die vorstehend genannte beispielhafte Abschaltung eines großen Erzeugers kann also bedeuten, dass an dem Beobachtungsknoten 301 die Windenergieanlage WT1 angeordnet ist und, zumindest in seiner Nähe, ebenfalls ein großer Erzeuger dort angeschlossen ist und zumindest anfangs eingespeist hat. Die Windenergieanlage kann also auch nach der Trennung des Erzeugers weitermessen. Im Übrigen könnte sie auch weitermessen, wenn sie selbst vom Netz getrennt wäre oder wenn sie repräsentativ für einen Windpark steht und dieser vom Netz getrennt wäre.

Somit verdeutlicht Figur 3, dass Windenergieanlagen zum Erfassen von Netzzuständen wie Leistungsflüssen verwendet werden können. Sie können über das Netz verteilt sein und dadurch an vielen Stellen die Knotenphasenwinkel aufnehmen. Das muss nicht unbedingt durch Windenergieanlagen ausgeführt werden, Windenergieanlagen dafür zu verwenden, ist aber eine effiziente Lösung.

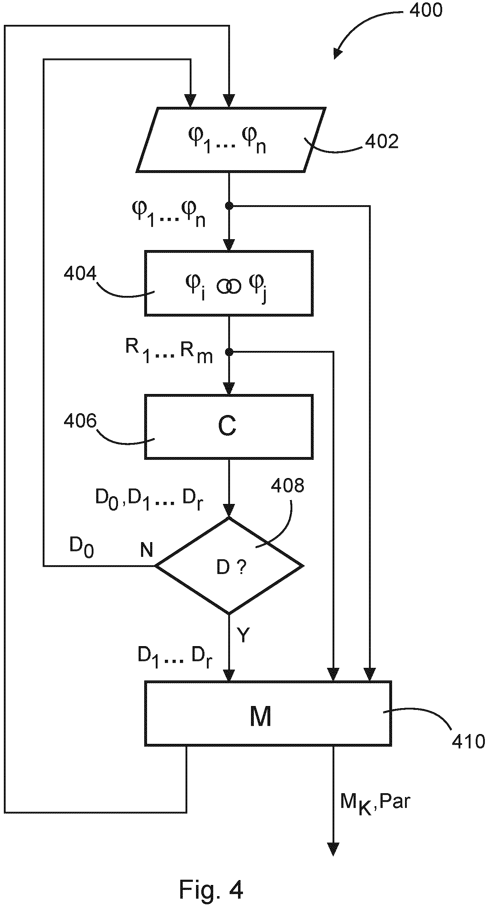

Figur 4 veranschaulicht einen Ablauf eines vorgeschlagenen Verfahrens zum Überwachen eines dreiphasigen elektrischen Versorgungsnetzes. Das Ablaufdiagramm 400 weist einen Eingabeblock 402 auf. Der Eingabeblock 402 kann auch als Erfassungsblock bezeichnet werden und er veranschaulicht, dass möglichst viele Knotenphasenwinkel ϕ₁ bis ϕₙ erfasst werden. Das können beispielsweise die Knotenphasenwinkel ϕ₁ bis ϕ₄ der Figur 3 sein. Vorzugsweise werden aber sehr viel mehr Beobachtungsknoten beobachtet und somit sehr viel mehr Knotenphasenwinkel aufgenommen. Vorzugsweise werden wenigstens 50 Beobachtungsknoten beobachtet und somit 50 Knotenphasenwinkel ϕ₁ bis ϕₙ erfasst. In dem Fall würde der Index n also wenigstens den Wert 50 aufweisen.

Der Eingabeblock 402 gibt dann die so erfassten Knotenphasenwinkel ϕ₁ bis ϕₙ an den Verknüpfungsblock 404. In dem Verknüpfungsblock werden Beziehungen wenigstens zwischen jeweils zwei Knotenphasenwinkeln hergestellt. Das ist in dem Verknüpfungsblock 404 dadurch symbolisiert, dass ein Knotenphasenwinkel i mit einem anderen Knotenphasenwinkel j in Beziehung gesetzt wird. Insbesondere kommt in Betracht, hier eine Differenz zu bilden. Auch in der Veranschaulichung der Figur 3 wurden entsprechende Differenzen gebildet.

Grundsätzlich kann jeder Knotenphasenwinkel mit jedem anderen Knotenphasenwinkel in Beziehung gesetzt werden, sodass n (n - 1) Beziehungen geprüft werden könnten. Oftmals kann es aber bedingt durch die konkrete Netztopologie sinnvoll sein, nur wenige Beziehungen zu überprüfen. Beispielsweise kommt in Betracht, dass Phasenwinkelbeziehungen jeweils nur zwischen zwei benachbarten Beobachtungsknoten betrachtet werden. Ein Knotenphasenwinkel wird dann, je nach Position seines Beobachtungsknotens, insbesondere mit einem, zwei oder drei Knotenphasenwinkeln jeweils in Beziehung gesetzt.

Jedenfalls ergeben sich die Beziehungen R₁ bis Rₘ. Der Index m steht also dafür, wie viele Beziehungen geprüft bzw. berechnet wurden. Im Übrigen können aber auch komplexere Beziehungen hergestellt werden als nur eine Differenzbildung zwischen zwei Knotenphasenwinkeln. Beispielsweise kommt für eine solche komplexere Beziehung in Betracht, mehr als zwei Knotenphasenwinkel miteinander in Beziehung zu bringen. Beziehungen mehrerer Knotenphasenwinkel untereinander können aber auch dadurch betrachtet werden, dass jeweils mehrere Phasenwinkelbeziehungen von jeweils zwei Knotenphasenwinkeln nochmals in Beziehung gesetzt werden. Beispielsweise kann ihre gegenseitige Ausbreitung beobachtet werden.

Die von dem Verknüpfungsblock 404 ausgegebenen Beziehungen R₁ bis Rₘ werden dann in einen Berechnungsblock 406 gegeben. Der Berechnungsblock 406 prüft besonders die erhaltenen Beziehungen darauf, ob sie einen Rückschluss auf eine Störung geben. Das Ergebnis kann somit die erkannte Störung sein, die hier als Störung D₁ bis Dᵣ bezeichnet wird. Meist dürfte die Anzahl möglicher Störungen, die durch den Index r gegeben ist, deutlich kleiner als die Anzahl möglicher Beziehungen und auch die Anzahl möglicher Beobachtungsknoten bzw. Knotenphasenwinkel sein. Als Störung Do wird die Ausgabe bezeichnet, die angibt, dass keine Störung vorliegt.

Im Idealfall gibt der Berechnungsblock 406 nur eine Störung aus. Diese wird an dem Abfrageblock 408 ausgewertet. Erhält der Abfrageblock also die Störung Do, so stellt er fest, dass keine Störung erkannt wurde und der Ablauf kann zu dem Eingabeblock 402 zurücckehren. Wurde aber eine Störung erkannt, so wurde entsprechend eine Störung D₁ bis Dᵣ ausgegeben. Das führt dann von dem Abfrageblock 408 zu dem Maßnahmenblock 410.

Der Maßnahmenblock 410 kann in Abhängigkeit von der erkannten Störung D₁ bis Dᵣ eine Maßnahme auswählen und parametrieren. Dafür erhält der Maßnahmenblock die konkrete Störung, aber auch weitere Informationen, die zu der Erkennung der Störung geführt haben, nämlich die Knotenphasenwinkel ϕ₁ bis ϕₙ und die Beziehungen R₁ bis Rₘ.

Der Maßnahmenblock gibt also eine Maßnahme Mₖ sowie einen oder mehrere Parameter Par dazu aus. Diese Parameter können ganz unterschiedlich sein, je nachdem, welche Maßnahme gefunden wurde. Einer der Parameter oder mehrere der Parameter können insbesondere beinhalten, die Maßnahme zu lokalisieren.

Soll also beispielsweise eine Leistungserhöhung vorgenommen werden, so könnte dies die Maßnahme Mₖ dem Grunde nach sein, es ist aber zusätzliche Information erforderlich, wie, also insbesondere wie schnell, und mit welcher Amplitude die Leistungseinspeisung erhöht werden soll, und insbesondere, wo diese Leistungserhöhung durchgeführt werden soll. Hier kommt auch in Betracht, dass mehrere Erzeuger eine entsprechende Maßnahme ergreifen. Dazu kommt auch in Betracht, dass diese mehreren Erzeuger möglicherweise dieselbe Maßnahme mit unterschiedlicher Amplitude ergreifen. Somit kann die Parametrierung, die in der Ausgabe des Maßnahmenblocks 410 als Par gekennzeichnet ist, sehr vielschichtig sein.

Im einfachsten Fall könnte jeder Störung D₁ bis Dᵣ eine Maßnahme Mₖ zugeordnet werden. Der Index k würde dann also von 1 bis r variieren können.

Allerdings kommt auch in Betracht, dass mehrere Störungen auf einmal aufgetreten sind und erkannt wurden. Beispielsweise können mehrere Störungen an unterschiedlichen Orten erkannt worden sein. Besonders dann, wenn 50 oder mehr Beobachtungsknoten involviert sind, können auch mehrere Störungen erkannt werden. Dass zeitgleich mehrere Störungen erkannt werden, kann natürlich darauf hindeuten, dass diese Störungen dieselbe Ursache haben.

Jedenfalls gibt der Maßnahmenblock 410 entsprechende Maßnahmen aus, einschließlich Parametrierung, und der Ablauf kehrt dann zum Anfang, also zum Eingabeblock 402 zurück.

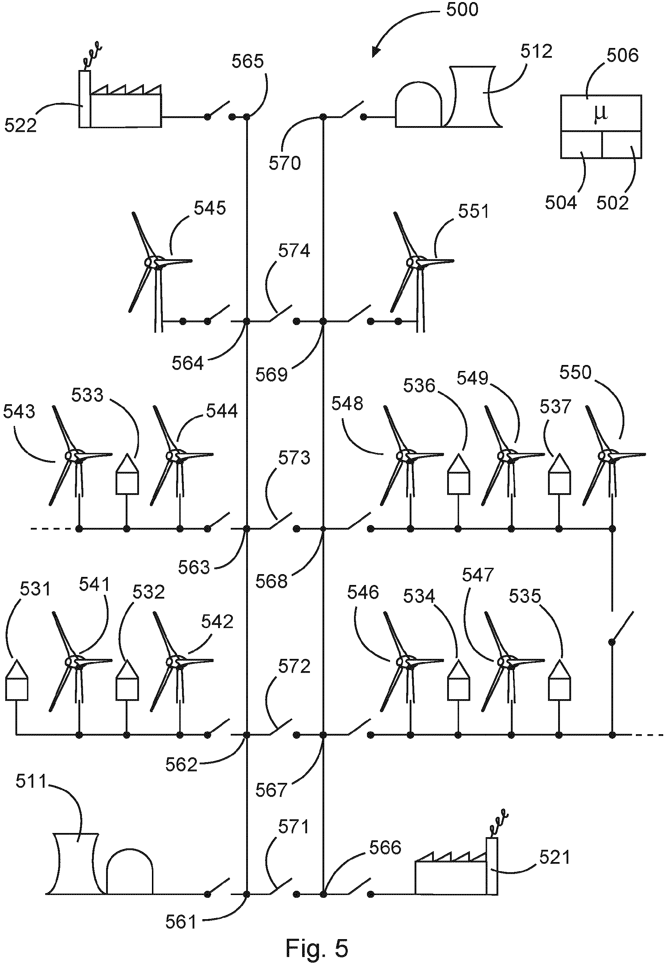

Figur 5 veranschaulicht einen Netzabschnitt 500 eines elektrischen Versorgungsnetzes. Zur Überwachung sind eine Auswerteeinrichtung 502 und eine Prüfeinrichtung 504 vorgesehen, die in einer zentralen Leitstelle 506 angeordnet sind.

Figur 5 zeigt sehr schematisch einige Elemente, nämlich ein erstes und zweites Kraftwerk 511 und 512, einen ersten und zweiten industriellen Verbraucher 521 und 522, sieben weitere Verbraucher 531 bis 537 und elf Windenergieanlagen 541 bis 551. Die sieben weiteren Verbraucher 531 bis 537 sind vereinfachend jeweils als ein Haus dargestellt, sie können somit für eine Ortschaft stehen, aber auch für andere Verbraucher, wie beispielsweise eine Elektrotankstelle. Die Windenergieanlagen 541 bis 551 können auch unterschiedlich sein, sie können teilweise einzelne Windenergieanlagen bilden und teilweise repräsentativ für Windparks stehen. Sie können auch alle jeweils für einen Windpark stehen.

Wichtig ist aber, dass jede dieser Windenergieanlagen 541 bis 551 (oder der Windpark) als Messaufnehmer dienen und damit der jeweilige Netzanschlusspunkt, an den sie einspeisen, der der Einfachheit halber in Figur 5 aber nicht eingezeichnet ist, somit jeweils einen Beobachtungsknoten bildet. Der veranschaulichte Netzabschnitt 500 weist somit elf Beobachtungsknoten auf, die hier der Einfachheit halber mit den elf Windenergieanlagen 541 bis 551 gleichgesetzt sind.

Der Netzabschnitt 500 weist zudem diverse Knotenpunkte auf, die jeweils, sofern sie nicht zu einem Schalter gehören, einen Netzknoten bilden, von denen der besseren Übersichtlichkeit halber nur zehn Netzknoten 561 bis 570 durchnummeriert sind. Außerdem sind diverse Trennschalter eingezeichnet, die im Normalfall geschlossen sind und nur der besseren Übersichtlichkeit halber in Figur 5 alle geöffnet dargestellt sind. Der besseren Übersichtlichkeit halber sind nur vier Netztrennschalter 571 bis 574 durchnummeriert.

Auch ansonsten sind die Netztrennschalter nur veranschaulichend dargestellt. So sind besonders die genannten Netztrennschalter 571 bis 574 jeweils in der Mitte zweier Übertragungsleitungen dargestellt. Der Netztrennschalter 571 ist also beispielsweise auf einer Übertragungsleitung zwischen den beiden Netzknoten 561 und 566 dargestellt. Normalerweise würde natürlich jeweils ein Netztrennschalter an jedem Netzknoten angeordnet sein.

Es sind auch diverse Übertragungsleitungen dargestellt, nämlich insbesondere jeweils eine zwischen zwei Netzknoten und auch jeweils eine zwischen einem Netzknoten und einem Erzeuger oder Verbraucher, oder zwischen einem Verbraucher und einem Erzeuger. Diese Netzabschnitte sind der besseren Übersichtlichkeit halber nicht mit Bezugszeichen versehen.

Die Windenergieanlagen 541 bis 551 können somit an ihrem jeweiligen Beobachtungsknoten Messwerte erfassen, insbesondere die, die auch in dem ersten Abschnitt der Figur 3 jeweils veranschaulicht wurden. Als Ergebnis können sie jeweils für ihren Beobachtungsknoten einen Knotenphasenwinkel ϕ₁ bis ϕ₁₁ ausgeben und an die zentrale Leitstelle 506 übertragen. Übertragungsleitungen für Daten sind der Einfachheit halber nicht dargestellt. Insbesondere kann aber jede Windenergieanlage bzw. der Windpark, für den sie repräsentativ steht, bidirektional mit der zentralen Leitstelle 506 kommunizieren.

Anhand von Figur 5 sollen unterschiedliche Netzstörungen veranschaulicht werden, und welche Folgen dies haben kann. Beispielsweise könnten im Normalfall auch die beiden Kraftwerke 511 und 512 viel Leistung einspeisen und die beiden industriellen Verbraucher 521 und 522 viel Leistung verbrauchen. In einem solchen Zustand fließt viel Leistung vom ersten Kraftwerk 511 zum ersten industriellen Verbraucher 521 und vom zweiten Kraftwerk 512 zum zweiten industriellen Verbraucher 522.

Tritt nun eine Störung im ersten industriellen Verbraucher 521 auf, so kommt in Betracht, dass der Netztrennschalter zwischen dem Knoten 566 und dem ersten industriellen Verbraucher 521 geöffnet wird. Das führt zu einem Phasensprung an dem Knoten 566 und dieser kann am stärksten von der Windenergieanlage 546, also dem dort zugeordneten Beobachtungsknoten, erfasst werden. Etwas später wird sich dieser Phasensprung auch weiter ausweiten und dann als Nächstes bei den Windenergieanlagen 542, 548 und 547 bemerkbar sein bzw. ihren jeweils zugeordneten Beobachtungsknoten, was nachfolgend nicht jedes Mal wiederholt wird. Noch etwas später kann sich diese Veränderung beispielsweise an den Windenergieanlagen 541, 544, 551 und 549 bemerkbar machen. Somit geht eine entsprechende Welle eines Phasenwinkelsprungs, der in größerer Entfernung von dem Knoten 566 möglicherweise weniger sprungförmig verläuft, durch das Netz bzw. den gezeigten Netzabschnitt 500.

Dadurch, dass nun genau erkannt wurde, wann welche Windenergieanlage was für einen Phasenwinkelsprung oder was für eine Phasenwinkelveränderung beobachtet, kann aus dieser Wellenbewegung auf den Ort und die Tatsache einer Trennung des industriellen Verbrauchers 521 zurückgeschlossen werden.

Je nach Größe der so erkannten Störung können besonders die in der Nähe stehenden Windenergieanlagen veranlasst werden, weniger Leistung einzuspeisen, denn durch die Trennung des industriellen Verbrauchers 521 wird weniger Leistung verbraucht und damit weniger benötigt. Neben dem Phasenwinkelsprung liegt in dem Moment somit auch ein Leistungsüberangebot vor, was durch diesen Phasenwinkelsprung erkannt werden konnte. Dadurch wird natürlich auch die Richtung des Phasenwinkelsprungs ausgewertet. Zu Aussagen, die aus der entsprechenden Richtung gezogen werden können, wird auf die Erläuterung zu Figur 3 verwiesen.

Nachfolgend wird eine weitere Störung anschaulich beschrieben, die sich möglicherweise auch infolge der Abtrennung des industriellen Verbrauchers 521 ergeben kann. Hierbei könnte ein Großteil der von dem ersten Kraftwerk 511 eingespeisten Leistung nun ein neues Ziel suchen und damit in dem Netzabschnitt 500 letztlich auch in Richtung zum zweiten Großkraftwerk 512 fließen. Das kann dazu führen, dass die Leistungseinspeisung des Großkraftwerks 512 zurückgeht. Dann wird aber recht schnell zu viel Leistung in dem Großkraftwerk 512 zur Verfügung stehen, die dann eingespeist wird und dann wie eine Welle zurück in Richtung zum ersten Großkraftwerk 511 fließen könnte.

All das ist eine sehr veranschaulichende Darstellung, aber es kommt jedenfalls in Betracht, dass sich eine Leistungspendelung zwischen den beiden Großkraftwerken 511 und 512 ergibt. Um dem entgegenzuwirken, könnten beispielsweise einige Windenergieanlagen, zum Beispiel insbesondere die Windenergieanlagen 551 in der Nähe des zweiten Großkraftwerks und 542 in der Nähe des ersten Großkraftwerks quasi antizyklisch ihre Leistungseinspeisung verringern oder erhöhen.

Es kommt aber auch beispielsweise eine Topologieumschaltung in Betracht. Besonders kann über Öffnen oder Schließen jeweils eines der Netztrennschalter 571 bis 574 eine Umleitung des Leistungsflusses in Betracht kommen.

Eine weitere mögliche Störung ist ein kaskadiertes Trennen. Das kaskadierte Trennen könnte auch mit dem bereits geschilderten Trennen des industriellen Verbrauchers 521 beginnen. Eine Konsequenz könnte sein, dass - auch das ist besonders zum Zwecke der Veranschaulichung geschildert, das erste Großkraftwerk 511 vom Netz getrennt wird. Der Grund könnte eine resultierende Überspannung sein, oder eine Überhöhung des eingespeisten Stroms aufgrund der bereits beschriebenen Leistungspendelung. Der Grund kann aber auch eine manuelle Trennung dieses ersten Großkraftwerks 511 von einer Leitzentrale sein.

Wird ein Großteil der erzeugten Leistung bzw. wurde ein Großteil der erzeugten Leistung des Großkraftwerks 511 für den ersten industriellen Verbraucher 521 benötigt, und trennt sich dieser industrielle Verbraucher 521 vom Netz, ist in der Konsequenz die von dem ersten Großkraftwerk 511 erzeugte Leistung im Wesentlichen zu viel im Netz, was eine manuelle Netztrennung veranlassen könnte. Dabei kann dahinstehen, ob eine solche manuelle Trennung ein menschlicher Fehler oder die richtige Entscheidung ist.

Jedenfalls würde eine solche zweite Trennung einen erneuten Phasensprung zur Folge haben, der zuerst an der Windenergieanlage 542 erkannt wird, erst etwas später an den Windenergieanlagen 546 und 544, noch später an weiteren Windenergieanlagen. Somit wurde eine zweite Welle der Knotenphasenwinkel erkannt, die etwas später gestartet ist und einen etwas unterschiedlichen Ursprung hat.

Eine weitere Konsequenz kann sein, dass nach dem Abschalten des Großkraftwerks 511 zu wenig Leistung im Netzabschnitt 500 ist. Speisen dann beispielsweise gerade die beiden Windenergieanlagen 541 und 542 nur sehr wenig Leistung ein, jedenfalls deutlich weniger als die Verbraucher 531 und 532 benötigen, so fließt möglicherweise ein zu hoher Strom an dem Netzknoten 562 in Richtung zu diesen Verbrauchern. Der Netztrennschalter zwischen der Windenergieanlage 542 und dem Netzknoten 562 könnte auslösen.

Es ergebe sich die dritte Trennung, hier die Abtrennung eines Netzabschnitts. Auch das könnte von den weiteren Windenergieanlagen erfasst werden. Von denen noch im Netzabschnitt 500 verbliebenden Windenergieanlagen würde dies möglicherweise zuerst bei den Windenergieanlagen 546 und 544 erkannt werden, bis es sich zu weiteren Windenergieanlagen fortpflanzt.

Auf diese Art und Weise kann ein kaskadiertes Trennen erkannt werden und es können Gegenmaßnahmen eingeleitet werden. Soweit das Trennen gut lokalisiert werden kann, kann auch erkannt werden, welche Leistungszuflüsse oder -abflüsse jeweils abgetrennt wurden und damit kann schnell das Leistungsdefizit oder der Leistungsüberschuss erkannt und durch eine entsprechende Steuerung kompensiert werden. Auch hier kommt insbesondere eine schnelle Leistungsanpassung der Windenergieanlagen in Betracht, denn diese sind sehr schnelle Regelungseinheiten im elektrischen Versorgungsnetz. Für kurzfristige Maßnahmen können diese auch eine signifikante Leistungserhöhung temporär bereitstellen.

Als weitere Störung kann auch das Auftrennen einer Übertragungsleitung erkannt werden. Wird beispielsweise der Netztrennschalter 572 geöffnet, damit also die Übertragungsleitung zwischen den Knoten 562 und 567 geöffnet, so verändert sich das Verhältnis der Knotenphasenwinkel der beiden Windenergieanlagen 542 und 546 zueinander. Andere Windenergieanlagen können auch Auswirkungen erfassen, diese beiden Windenergieanlagen erfassen aber die stärkste Auswirkung und damit kann diese Trennung auch lokalisiert werden.

Ebenso kann auch die Abtrennung eines Teilnetzes erkannt werden, was auch als *System Split* bezeichnet wird. Beispielsweise kann erkannt werden, wenn alle vier Netztrennschalter 571 bis 574 geöffnet sind. Das kann beispielsweise dann erfolgen, wenn aus Wartungsgründen oder wenn aus anderen Gründen eine Übertragungsleitung oder mehrere abgeschaltet werden muss bzw. müssen, nur noch zwei oder vielleicht sogar nur noch einer der genannten vier Netztrennschalter geschlossen ist.

Besonders der gravierende Stromausfall im europäischen Verbundnetz am 4. November 2006 kann hier, vereinfachend, veranschaulicht werden. Es wurde damals zur Auslieferung eines Kreuzfahrtschiffes eine Hochspannungsverbindung mit zwei Übertragungsleitungen abgeschaltet. Das könnten zum Beispiel die Übertragungsleitungen 571 und 572 sein. In dem Fall gab es zudem einen starken Leistungsfluss, der beispielsweise durch einen Leistungsfluss von der "rechten Seite der Figur 5" zur "linken Seite der Figur 5" veranschaulicht werden könnte. Die vier Netztrennschalter 571 bis 574 bilden also die Trennung zwischen diesen beiden Seiten. All die Leistung könnte dann aber noch über die Überragungsleitungen der verbleibenden Netztrennschalter 573 und 574, die geschlossen sein sollten, übertragen werden.

Als Fehler wurde aber übersehen, dass eine dieser beiden Übertragungsleitungen zu Wartungszwecken ebenfalls getrennt war. Das Ergebnis war, dass, wenn beispielsweise der Trennschalter 573 unberücksichtigt geöffnet war, die gesamte Leistung nun über die Übertragungsleitung fließen musste, die den Netztrennschalter 574 aufweist. Das überschritt aber die zulässige Übertragungsleistung und führte dann ebenfalls zu einer Sicherheitsabschaltung. Auch dies ist natürlich sehr vereinfacht dargestellt.

Jedenfalls wird dann der Trennschalter 574 als letzter von den vier genannten geöffnet und das macht sich sofort in den Phasenwinkeln quasi der im rechten Teil verbliebenen Windenergieanlagen einerseits und der im linken Teil verbliebenen Windenergieanlagen andererseits bemerkbar. Es ist dann sofort erkennbar, welches Problem vorliegt.

Aus der Größe der zuvor über die Leitungen übertragenen Leistung ist auch die Größe des durch die Trennung resultierenden Leistungsdefizits der einen Seite und des Leistungs-überschusses der anderen Seite bekannt.

Auch das könnte aus den Knotenphasenwinkeln abgelesen werden, wie in Figur 3 erläutert wurde. Entsprechend könnten besonders die Windenergieanlagen der rechten Seite sofort ihre Leistung reduzieren, um das Leistungsüberangebot dort zu verringern. Andererseits könnte eine Leistungserhöhung zusammen mit dem Herunterfahren oder notfalls Abschalten einiger Verbraucher im linken Teil durchgeführt werden.

Im Übrigen wäre möglicherweise das Ereignis vom 4. November 2006 verhinderbar gewesen, denn bereits der überhöhte Leistungsfluss aufgrund der wegen Wartung abgeschalteten Leistung wäre erkannt worden. Spätestens nach dem Auftrennen wäre die drohende Instabilität erkannt worden. Darauf hätte reagiert werden können, nämlich mit sofortiger Verringerung der Leistungserzeugung "auf der rechten" Seite der Windenergieanlagen. Dann hätte vielleicht die Übertragungsleistung über die verbliebene einzige Übertragungsleitung auf ein zulässiges Maß schnell genug abgesenkt werden können. Tatsächlich ist unmittelbar vordem Ereignis am 4. November 2006 viel Leistung aus Windenergieanlagen übertragen worden. Mit einem entsprechenden Steuerbefehl hätten die betreffenden Windenergieanlagen ihre Leistung sofort reduzieren können.

Wie gesagt, der Vorgang am 4. November 2006 war natürlich deutlich komplexer und wurde hier nur zur besseren Veranschaulichung herangezogen.

Auch eine Topologieumschaltung kann erkannt werden, um ein weiteres Beispiel einer Störung zu nennen. Eine Topologieumschaltung kann eine der genannten Trennungen der Übertragungsleitung sein, also das Auftrennen der Netztrennschalter 571 und 572, eine Topologieumschaltung kann aber auch besonders so gestaltet sein, dass ein Trennschalter geöffnet und ein anderer geschlossen wurde. Beispielsweise könnte der Netztrennschalter 574 geöffnet und der Netztrennschalter 573 geschlossen werden, aus welchen Gründen auch immer.

Dadurch stehen nach wie vor gleich viele Übertragungsleitungen "von der rechten zur linken Seite" zur Verfügung, auch mit gleicher Kapazität, aber die Führung des Leistungsflusses hat sich dennoch geändert. Besonders der Leistungsfluss vom zweiten Großkraftwerk 512 zum zweiten industriellen Verbraucher 522 hat sich geändert. Besonders die Windenergieanlagen 544, 545, 548 und 551 können diese Änderung der Topologie am besten an den erfassten Knotenphasenwinkeln erkennen bzw. die Auswerteeinrichtung 502 kann dies anhand der Knotenphasenwinkel erkennen, die diese vier genannten Windenergieanlagen liefern.

Hier kommt auch in Betracht, dass keine Stützmaßnahme ergriffen werden muss, oder bedingt durch den nun verlängerten Weg des genannten Leistungsflusses könnten Spannungsstützmaßnahmen in Betracht kommen, die einige Windenergieanlagen ausführen können.

Erfindungsgemäß wurde besonders Folgendes erkannt.

In verteilten Drehstromnetzen ergeben sich durch Lastflüsse und dynamische Effekte zwischen den Knoten Phasenverschiebungen in den Knotenspannungen (statisch und dynamisch). Die Verschiebung resultiert vorwiegend durch den Spannungsabfall über die Netzimpedanz (statisch) und ist umso größer, je größer die Netzimpedanz und je größer der Lastfluss über die Netzimpedanz ist. Aber auch Netzpendelungen und Störungen laufen durch das Netz und sind in einer Reaktion der Spannungswinkel an den Netzknoten erkennbar. Insgesamt kann die statische Phasenverschiebung vom Netzschwerpunkt bis zu +/- 90° betragen.

Es wurde auch erkannt, dass ein Betreiber von Windenergieanlagen Zugriff auf tausende Messpunkte der Spannung im Netz haben kann, und damit Zugriff auf deutlich mehr Messpunkte, als die anderen Netzbetreiber haben kann. Eine Idee ist es, die Information der Verteilung der Netzphasenwinkel zur Erkennung dynamischer Netzeffekte und Stabilitätsgrenzen zu nutzen.

Es wurde ein Vorschlag gefunden, dadurch eine Bewertung der Netzstabilität durchzuführen. Eine Erkennung von Leistungspendelungen und auch eine Erkennung von Netzstörungen und Topologieumschaltungen mit einem Einfluss auf die Netzstabilität wird dadurch möglich.

Möglich wird auch eine Erkennung von Netzstörungen und dynamischen Effekten, insbesondere von einem System-Split, einem kaskadierten Trennen von Netzteilen, Erzeugern und Verbrauchern, von einem Ausfall von Leitungen und Verlust der Redundanz und von Kurzschlüssen. Leistungspendelungen können erkannt werden, und eine Stabilitätsbewertung und Aktivierung von Maßnahmen zur Verbesserung der Stabilität durchgeführt werden. Auch eine Erkennung dynamischer Effekte und Reaktion auf diese ist möglich.

Eine Idee ist es, an möglichst allen Windenergieanlagen (oder alternativ an allen Windparks) den Spannungswinkel der Netzspannung zu erfassen und auszuwerten. Folgende Informationen, oder einige davon, sollten dabei vor Ort vorliegen:
Eine hochpräzise Zeitinformation, ein GPS oder anderes Zeitsignal, Referenzwinkel und Referenzzeit, Spannungswinkelinformation (Phasenverschiebung zum Referenzwinkel).

Die Informationen können teilweise aus einer Umrichterregelung (Inverter-Control), aus Grid Data Monitoring Modul (externe oder interne Auswertung), oder aus Messung an einem Parkregler bzw. einer Parksteuereinheit (FCU) erhalten werden.

Ein Vorschlag ist, dass für eine übergreifende Nutzung der gemessene Spannungszeiger mit einem Zeitsignal markiert wird und zentral ausgewertet wird. Dabei müssen Zeitverzögerungen in der Kommunikation zwischen Zeitmodul und Netzmessmodul möglichst klein, oder zumindest immer gleich lang sein.

Es wird vorgeschlagen, dass an einer zentralen Stelle die Winkelinformationen zusammen mit dem Standort ausgewertet werden. Daraus kann ein präzises Bild der relativen Lastflüsse im Netz zwischen den Netzknoten errechnet werden. Durch die optionale Anreicherung mit statischen topologischen Netzinformationen lässt sich in Echtzeit folgendes bestimmen:
Eine Netzgruppenzuordnung einer Windenergieanlage im Verteilnetz (an welchen Übertragungsnetzknoten ist gerade welcher Windpark wirksam angeschlossen). Es lässt sich auch ein aktueller topologischer Aufbau des Netzes bestimmen (Schalterstellungen, Sammelschienenverschaltungen, Abschaltungen von Leitungen).

## Patentansprüche

1. Verfahren zum Überwachen eines dreiphasigen elektrischen Versorgungsnetzes (500), wobei
- das elektrische Versorgungsnetz (500)
- eine Netztopologie mit örtlich verteilten Netzknoten (561-570) aufweist, und
- mehrere der Netzknoten als Beobachtungsknoten (561-570) ausgebildet sind, an denen jeweils wenigstens eine Spannung nach Betrag und Phase erfasst werden kann,
umfassend die Schritte
- Erfassen jeweils wenigstens einer Knotenspannung (u(t)) an jedem Beobachtungsknoten, sodass mehrere Knotenspannungen erfasst werden, wobei
- jede Knotenspannung (u(t)) durch einen Knotenphasenwinkel (ϕ₁ - ϕₙ) gekennzeichnet ist, als Phasenwinkel der Knotenspannung, und
- jeder Knotenphasenwinkel jeweils einen Phasenwinkel in Bezug auf einen Referenzphasenwinkel einer Spannung beschreibt, sodass
- mehrere über die Netztopologie verteilte Knotenphasenwinkel vorhanden sind,
- Ermitteln wenigstens einer Phasenwinkelbeziehung (R₁-Rₘ), die jeweils eine Beziehung zwischen wenigstens zwei der über die Netztopologie verteilten Knotenphasenwinkel beschreibt, und
- Überprüfen des elektrischen Versorgungsnetzes auf eine Netzstörung in Abhängigkeit von der wenigstens einen Phasenwinkelbeziehung.

2. Verfahren nach Anspruch 1, **dadurch gekennzeichnet, dass**
- zum Prüfen auf die Netzstörung eine zeitliche und örtliche Veränderung der Knotenphasenwinkel ausgewertet wird.

3. Verfahren nach Anspruch 1 oder 2, **dadurch gekennzeichnet, dass**
- jeweils mit einer Frequenz umlaufende Phasenwinkel der Knotenspannung erfasst werden, und/oder
- eine mittlere Frequenz und/oder eine mittlere Frequenzdrift des elektrischen Versorgungsnetzes oder eines Netzabschnitts davon aus den mit der Frequenz umlaufenden Phasenwinkeln erfasst wird, und optional
- aus der Frequenzdrift eine Leistungsbilanz des elektrischen Versorgungsnetzes bzw. des Netzabschnitts abgeleitet wird.

4. Verfahren nach einem der vorstehenden Ansprüche, **dadurch gekennzeichnet, dass**
die Netzstörungen in Abhängigkeit von der wenigstens einen Phasenwinkelbeziehung (R₁-Rₘ) nach Netzstörungsart und/oder Amplitude bewertet werden.

5. Verfahren nach einem der vorstehenden Ansprüche, **dadurch gekennzeichnet, dass**
die Netzstörungen, auf die geprüft wird, ausgewählt sind aus Netzstörungsarten aus der Liste aufweisend
- eine Topologieumschaltung, bei der die Netztopologie durch wenigstens eine Umschaltung verändert wird,
- eine Netztrennung, bei der wenigstens zwei Netzabschnitte voneinander getrennt werden,
- ein kaskadiertes Trennen, bei dem nach und nach
- Netzabschnitte des elektrischen Versorgungsnetzes voneinander getrennt werden,
- potentiell in das elektrische Versorgungsnetz einspeisende Erzeuger von dem elektrischen Versorgungsnetz getrennt werden und/oder
- potentiell aus dem elektrischen Versorgungsnetz Leistung beziehende Verbraucher von dem elektrischen Versorgungsnetz getrennt werden,
- einen Ausfall wenigstens eines Leistungsübertragungspfads, auf dem Leistung zwischen wenigstens zwei Netzknoten vor dem Ausfall übertragen wurde,
- einen Netzkurzschluss, bei dem wenigstens ein Kurzschluss zwischen zwei Phasen des elektrischen Versorgungsnetzes oder wenigstens zwischen einer Phase des elektrischen Versorgungsnetzes und Erde auftritt, und
- eine Leistungspendelung, bei der Leistung zwischen Netzabschnitten des elektrischen Versorgungsnetzes pendelt.

6. Verfahren nach einem der vorstehenden Ansprüche, **dadurch gekennzeichnet, dass**
- zum Prüfen auf eine Leistungspendelung
- in Abhängigkeit von der wenigstens einen Phasenwinkelbeziehung ein Vorliegen einer periodischen Lastflussvariation geprüft wird, wobei
- eine periodische Lastflussvariation eine periodisch wiederkehrende Variation eines Leistungsflusses beschreibt, und der Lastfluss einen Leistungsfluss zwischen wenigstens zwei Netzabschnitten und/oder auf einer Hochspannungsübertragungsleitung beschreibt, wobei
- von einer Leistungspendelung ausgegangen wird, wenn eine periodische Lastflussvariation um einen Wert erkannt wurde, der oberhalb eines vorgebbaren Variationsreferenzwertes liegt, der insbesondere wenigstens 2%, wenigstens 5%, oder wenigstens 10% beträgt.

7. Verfahren nach einem der vorstehenden Ansprüche, **dadurch gekennzeichnet, dass**
- zum Prüfen auf eine Netztrennung
- ein Vorliegen einer Knotenphasenwelle geprüft wird, wobei
- eine Knotenphasenwelle eine Veränderung eines Knotenphasenwinkels beschreibt, die sich ausgehend von wenigstens einem der Beobachtungsknoten zu weiteren Beobachtungsknoten fortsetzt, und wobei
- von einer Netztrennung ausgegangen wird, wenn
- eine Veränderung eines Knotenphasenwinkels, insbesondere ein Sprung des Knotenphasenwinkels, an einem ersten Beobachtungsknoten um einen Wert erkannt wurde, der dem Betrage nach wenigstens einen vorgebbaren ersten Veränderungsreferenzwinkel aufweist, und
- um eine Ausbreitungszeit zeitlich versetzt eine Veränderung eines Knotenphasenwinkels, insbesondere ein Sprung des Knotenphasenwinkels, an wenigstens einem zweiten Beobachtungsknoten um einen Wert erkannt wurde, der dem Betrage nach wenigstens einen vorgebbaren zweiten Veränderungsreferenzwinkel aufweist, wobei insbesondere
- der zweite Veränderungsreferenzwinkel kleiner als der erste Veränderungsreferenzwinkel ist und wenigstens 5° beträgt, insbesondere wenigstens 10° beträgt und/oder die Ausbreitungszeit im Bereich von 20ms bis 100ms liegt.

8. Verfahren nach einem der vorstehenden Ansprüche, **dadurch gekennzeichnet, dass**
- zum Prüfen auf ein kaskadiertes Trennen
- ein Vorliegen mehrmaliger Spannungssprünge geprüft wird, wobei
- jeder Spannungssprung als Knotenphasenwinkelsprung eines Knotenphasenwinkels an einem Beobachtungsknoten in Bezug auf einen Knotenphasenwinkel an einem anderen Beobachtungsknoten auftritt, und
- wenigstens drei Phasenwinkelsprünge beobachtet werden, wobei
- von einem kaskadierten Trennen ausgegangen wird, wenn jeder der Knotenphasensprünge eine Knotenphasenwinkelveränderung von wenigstens einer vorgebbaren Referenzwinkelveränderung aufweist, mit einem zeitlichen Abstand zwischen jeweils zwei Knotenphasensprüngen, der als Sprungabstand bezeichnet werden kann und im Bereich von 100ms bis 10s liegt, und wobei jeder der Knotenphasensprünge eine Sprunghöhe von mindestens 0,5°, insbesondere mindestens 2° aufweist.

9. Verfahren nach einem der vorstehenden Ansprüche, **dadurch gekennzeichnet, dass**
- zum Prüfen auf einen Ausfall von Leitungen
- ein Vorliegen einer erhöhten Knotenphasenwinkeldifferenz zwischen Knotenphasenwinkeln zweier Beobachtungsknoten geprüft wird, wobei
- von einer erhöhten Knotenphasenwinkeldifferenz und damit von wenigstens einem Ausfall einer Leitung ausgegangen wird, wenn eine erfasste Knotenphasenwinkeldifferenz dem Betrage nach wenigstens um einen vorbestimmten Offsetwinkel oberhalb einer für diese beiden Beobachtungsknoten durchschnittlichen Knotenphasenwinkeldifferenz liegt, und insbesondere
- der Offsetwinkel einen Wert von wenigstens 3° aufweist, insbesondere von wenigstens 5° aufweist und/oder
- der Offsetwinkel wenigstens 25%, insbesondere wenigstens 35% der durchschnittlichen Knotenphasenwinkeldifferenz beträgt.

10. Verfahren nach einem der vorstehenden Ansprüche, **dadurch gekennzeichnet, dass**
- in Abhängigkeit von der wenigstens einen Knotenphasenbeziehung die wenigstens eine Netzstörung in der Netztopologie lokalisiert wird.

11. Verfahren nach einem der vorstehenden Ansprüche, **dadurch gekennzeichnet, dass**
- in Abhängigkeit von der wenigstens einen erfassten Netzstörung eine Bewertung einer Netzstabilität des elektrischen Versorgungsnetzes erfolgt, wobei die Bewertung in Abhängigkeit von wenigstens einer erfassten Störungseigenschaft der Netzstörung erfolgt, ausgewählt aus der Eigenschaftsliste aufweisend:
- einen erfassten Ort der Netzstörung,
- eine Netzstörungsart, und/oder
- eine Amplitude der erfassten Netzstörung.

12. Verfahren nach einem der vorstehenden Ansprüche, **dadurch gekennzeichnet, dass**
- in Abhängigkeit von der wenigstens einen erfassten Netzstörung und/oder
- in Abhängigkeit von einer bzw. der Bewertung einer Netzstabilität
- eine Stabilisierungsmaßnahme durchgeführt wird, insbesondere aus der Liste aufweisend:
- Öffnen oder Schließen wenigstens eines Trennschalters des elektrischen Versorgungsnetzes,
- Trennen oder Zuschalten eines Erzeugers,
- Trennen oder Zuschalten eines Verbrauchers,
- Vorgeben einer Änderung eingespeister Wirkleistung,
- Vorgeben einer Änderung eingespeister Blindleistung und
- Implementieren oder Einstellen einer Dämpfungsmaßnahme, bei der eine frequenzabhängige Leistungsregelung und/oder eine spannungsabhängige Blindleistungsregelung jeweils in ihrem Übertragungsverhalten, insbesondere in einem Verstärkungsfaktor, eingestellt wird.

13. Verfahren nach einem der vorstehenden Ansprüche, **dadurch gekennzeichnet, dass**
- das Erfassen wenigstens einer, insbesondere wenigstens 50%, vorzugsweise wenigstens 80%, der Knotenspannungen und Knotenphasenwinkel jeweils mittels einer an das elektrische Versorgungsnetz an dem jeweiligen Beobachtungsknoten angeschlossenen Windenergieanlage oder Windpark erfolgt, und/oder
- wenigstens eine Stabilisierungsmaßnahme durch wenigstens eine bzw. wenigstens die eine an das elektrische Versorgungsnetz an dem jeweiligen Beobachtungsknoten angeschlossene Windenergieanlage oder Windpark erfolgt.

14. Verfahren nach einem der vorstehenden Ansprüche, **dadurch gekennzeichnet, dass**
das Verfahren wenigsten 50 Beobachtungsknoten verwendet, an denen jeweils eine Knotenspannung erfasst und zum Ermitteln jeweils wenigstens einer Phasenwinkelbeziehung verwendet wird.

15. Überwachungsanordnung zum Überwachen eines dreiphasigen elektrischen Versorgungsnetzes, wobei
- das elektrische Versorgungsnetz
- eine Netztopologie mit örtlich verteilten Netzknoten aufweist, und
- mehrere der Netzknoten als Beobachtungsknoten ausgebildet sind, an denen jeweils wenigstens eine Spannung nach Betrag und Phase erfasst werden kann,
umfassend
- für jeden Beobachtungsknoten jeweils eine Erfassungseinrichtung, vorbereitet zum Erfassen jeweils wenigstens einer Knotenspannung an dem jeweiligen Beobachtungsknoten, sodass mehrere Knotenspannungen erfasst werden, wobei
- jede Knotenspannung durch einen Knotenphasenwinkel gekennzeichnet ist, als Phasenwinkel der Knotenspannung, und
- jeder Knotenphasenwinkel jeweils einen Phasenwinkel in Bezug auf einen Referenzphasenwinkel einer Spannung beschreibt, sodass
- mehrere über die Netztopologie verteilte Knotenphasenwinkel vorhanden sind,
- eine Auswerteeinrichtung (502), vorbereitet zum Ermitteln wenigstens einer Phasenwinkelbeziehung, die jeweils eine Beziehung zwischen wenigstens zwei der über die Netztopologie verteilten Knotenphasenwinkel beschreibt, und
- eine Prüfeinrichtung (504), vorbereitet zum Überprüfen des elektrischen Versorgungsnetzes auf eine Netzstörung in Abhängigkeit von der wenigstens einen Phasenwinkelbeziehung.

16. Überwachungsanordnung nach Anspruch 15, **dadurch gekennzeichnet, dass** sie dazu vorbereitet ist, ein Verfahren nach wenigstens einem der Ansprüche 1 bis 14 auszuführen.

17. Überwachungsanordnung nach Anspruch 15 oder 16, **dadurch gekennzeichnet, dass**
eine, mehrere oder alle der Erfassungseinrichtungen in einer Windenergieanlage oder einem Windpark realisiert sind, und/oder
einer, mehrere oder alle der Beobachtungsknoten als Netzanschlusspunkte ausgebildet sind, über die jeweils ein Erzeuger, insbesondere jeweils eine Windenergieanlage oder ein Windpark in das elektrische Versorgungsnetz einspeist.
